# FASCICULE DE BREVET EUROPEEN

(11) **EP 3 077 483 B1**
(45) Date de publication et mention de la délivrance du brevet: **30.05.2018**
(21) Numéro de dépôt: 14802928.3
(22) Date de dépôt: 27.11.2014
(51) Int. Cl.: C10G 21/14, C10G 21/00, C10G 47/30, C10G 47/02, C10G 49/04, C10G 49/16, C10G 53/06, C10G 67/04, C10G 67/14, C10G 47/00, C10G 45/20, C10G 45/08

(54) **PROCEDE DE CONVERSION D'UNE CHARGE HYDROCARBONEE LOURDE INTEGRANT UN DESASPHALTAGE SELECTIF EN CASCADE AVEC RECYCLAGE D'UNE COUPE DESASPHALTEE**
VERFAHREN ZUR UMWANDLUNG EINES SCHWEREN KOHLENWASSERSTOFFAUSGANGSMATERIALS MIT SELEKTIVER DEASPHALTIERUNG IN SERIE MIT RECYCLING EINES DEASPHALTIERTEN SCHNITTES
METHOD FOR CONVERTING A HEAVY HYDROCARBON FEEDSTOCK INCORPORATING SELECTIVE DEASPHALTING IN SERIES WITH RECYCLING OF A DEASPHALTED CUT

(30) Priorité: 03.12.2013 FR 1362030
(43) Date de publication de la demande: 12.10.2016
(73) Titulaire: IFP Energies nouvelles, 92500 Rueil-Malmaison (FR)
(72) Inventeur: MAJCHER, Jerome, F-69008 Lyon (FR); MEDRIGNAC, Isabelle, F-69970 Chaponnay (FR); FEUGNET, Frederic, F-69004 Lyon (FR)
(86) Numéro de dépôt international: PCT/EP2014/075859
(87) Numéro de publication internationale: WO 2015/082314

(56) Documents cités:
- FR-A1- 2 964 388
- US-A- 3 278 415
- US-A- 4 940 529

## Description

### Domaine de l'invention

La présente invention concerne un nouveau procédé de conversion d'une charge lourde d'hydrocarbures, notamment issue de la distillation atmosphérique ou de la distillation sous-vide de pétrole brut.

Il est connu que les performances des procédés de valorisation et de conversion se heurtent généralement à des limitations qui sont principalement liées à la présence de structures moléculaires dites réfractaires. En effet, ces structures moléculaires (hétéro-éléments, molécules polyaromatiques et molécules polaires présentes dans les résines et les asphaltènes) sont responsables de la formation de sédiments provoquant un bouchage des équipements en aval des unités d'hydroconversion de charges lourdes et par voie de conséquence des arrêts fréquents lors du fonctionnement de ces équipements. Aussi, afin de réduire la fréquence des arrêts de fonctionnement, les unités d'hydroconversion de charges lourdes sont souvent mises en oeuvre dans des conditions opératoires plus douces, limitant par conséquent le taux de conversion.

Un des objectifs de la présente invention est donc d'augmenter le niveau de conversion de la charge valorisable.

Un autre objectif de l'invention est de minimiser la formation de tels sédiments dans les équipements en aval des unités d'hydroconversion.

Une des solutions connues dans l'état de l'art consiste à réaliser un enchaînement avec une unité de désasphaltage (appelé dans la suite du texte SDA classique ou conventionnel) et d'une unité d'hydroconversion.

Le principe du désasphaltage repose sur une séparation par précipitation d'un résidu pétrolier en deux phases: i) une phase dite "huile désasphaltée", encore appelée "matrice huile" ou "phase huile" ou DAO (De-Asphalted Oil selon la terminologie anglo-saxonne); et ii) une phase dite "asphalte" ou parfois "pitch" (selon la terminologie anglo-saxonne) contenant entre autres les structures moléculaires réfractaires. L'asphalte, de par sa qualité médiocre est un produit pénalisant pour les schémas de raffinage, qu'il convient de minimiser.
Les demandes de brevet US 2012/0061292 A1 et US 2012/0061293 A1 décrivent un enchaînement de procédés lit bouillonnant et de désasphaltage classique avec le recyclage de l'huile désasphaltée DAO en amont du lit bouillonnant. US4940529 divulgue un procédé de désasphaltage en plusieurs étapes d'un résidu hydrotraité obtenu par distillation sous-vide, pour obtenir DAO, résines désasphaltées et asphaltènes.

Ces demandes de brevet décrivent un désasphaltage classique qui, de par son principe, souffre de limitations en particulier d'une limitation du rendement en huile désasphaltée DAO qui augmente avec le poids moléculaire du solvant (jusqu'au solvant C6/C7) puis plafonne à un seuil propre à chaque charge et chaque solvant. Par ailleurs, ce désasphaltage classique souffre d'une sélectivité très faible, entrainant l'extraction, vers la fraction asphalte, de structures moléculaires encore valorisables.
La demanderesse dans ses recherches a mis au point un nouveau procédé de conversion d'une charge lourde d'hydrocarbures permettant de pallier les inconvénients précités, par l'intégration d'au moins deux étapes de désasphaltage en série permettant de séparer au moins une fraction asphalte, au moins une fraction d'huile désasphaltée lourde, dite DAO lourde et au moins une fraction d'huile désasphaltée légère dite DAO légère. Il a été constaté que la mise en oeuvre du procédé selon l'invention permettait de produire une huile désasphaltée DAO lourde présentant un caractère aromatique (c'est-à-dire comprenant des structures aromatiques) plus prononcé que dans le cas d'un désasphaltage classique et que le recyclage de ladite huile désasphaltée lourde en amont de l'étape d'hydroconversion permettait une meilleure stabilisation du milieu traité en lit bouillonnant par la solubilisation et/ou la peptisation et/ou la dispersion des structures moléculaires propices à la formation des sédiments et ainsi d'atteindre des niveaux de conversion globaux de la charge initiale plus élevés.

### Objet de l'invention

La présente invention concerne un procédé de conversion d'une charge lourde d'hydrocarbures ayant une température initiale d'ébullition d'au moins 300°C comprenant les étapes suivantes :
a) une étape d'hydroconversion d'au moins une partie de ladite charge en présence d'hydrogène dans au moins un réacteur triphasique, ledit réacteur contenant au moins un catalyseur d'hydroconversion et fonctionnant en lit bouillonnant, à courant ascendant de liquide et de gaz et comportant au moins un moyen de soutirage dudit catalyseur hors dudit réacteur et au moins un moyen d'appoint de catalyseur frais dans ledit réacteur, dans des conditions permettant d'obtenir une charge liquide à teneur réduite en carbone Conradson, en métaux, en soufre et en azote,
b) une étape de séparation de l'effluent issu de l'étape a) pour obtenir une fraction liquide légère bouillant à une température inférieure à 300°C et une fraction liquide lourde bouillant à une température supérieure à 300°C,
c) au moins deux étapes de désasphaltage en série sur au moins une partie de la fraction liquide lourde issue de l'étape b), permettant de séparer au moins une fraction asphalte, au moins une fraction d'huile désasphaltée lourde, dite DAO lourde et au moins une fraction d'huile désasphaltée légère dite DAO légère, au moins une desdites étapes de désasphaltage étant réalisée au moyen d'un mélange d'au moins un solvant polaire et d'au moins un solvant apolaire, les proportions dudit solvant polaire et dudit solvant apolaire du mélange de solvant étant ajustées selon les propriétés de la charge traitée et selon le rendement en asphalte et/ou la qualité de l'huile désasphaltée souhaité (e)(s), lesdites étapes de désasphaltage étant mises en oeuvre dans les conditions subcritiques du mélange des solvants utilisé,
d) une étape de recyclage d'au moins une partie de ladite coupe huile desasphaltée DAO lourde issue de l'étape c) en amont de l'étape a) d'hydroconversion.
Dans une variante du procédé, l'étape c) est mise en oeuvre sur au moins une partie de la fraction liquide lourde bouillant à une température supérieure à 300°C préalablement soumise à une étape de strippage à la vapeur et/ou à l'hydrogène ou à une étape de fractionnement sous-vide.

Avantageusement selon l'invention, l'étape a) d'hydroconversion opère sous une pression absolue comprise entre 2 et 35 MPa, à une température comprise entre 300 et 550°C, à une vitesse spatiale horaire (VVH) comprise entre 0,1 h⁻¹ et 10 h⁻¹ et sous une quantité d'hydrogène mélangée à la charge comprise entre 50 et 5000 normaux mètres cube (Nm³) par mètre cube (m³) de charge liquide.

Avantageusement selon l'invention, le catalyseur d'hydroconversion de l'étape a) est un catalyseur comprenant un support alumine et au moins un métal du groupe VIII choisi parmi le nickel et le cobalt, ledit élément du groupe VIII étant utilisé en association avec au moins un métal du groupe VIB choisi parmi le molybdène et le tungstène.

Avantageusement selon l'invention, le solvant polaire utilisé à l'étape c) de désasphaltage est choisi parmi les solvants aromatiques purs ou napthéno-aromatiques, les solvants polaires comportant des hétéro-éléments, ou leur mélange ou des coupes riches en aromatiques telles des coupes issues du FCC (Fluid Catalytic Cracking), des coupes dérivées du charbon, de la biomasse ou de mélange biomasse/charbon.

Avantageusement selon l'invention, le solvant apolaire utilisé à l'étape c) de désasphaltage comprend un solvant composé d'hydrocarbure saturé comprenant un nombre d'atomes de carbone supérieur ou égal à 2, de préférence compris entre 2 et 9.

Avantageusement selon l'invention, l'étape c) est mise en oeuvre avec un rapport de volume du mélange de solvants polaire et apolaire sur la masse de la charge compris entre 1/1 et 10/1 exprimé en litres par kilogrammes.

Avantageusement selon l'invention, au moins une partie de la coupe huile désasphaltée DAO lourde non recyclée en amont de l'étape a) d'hydroconversion et/ou à l'entrée de l'étape b) de séparation est envoyée, de préférence en mélange avec au moins une partie de la fraction liquide légère issue de l'étape b) et/ou au moins une partie de l'huile désasphaltée DAO légère issue de l'étape c) dans des unités de post-traitement.

Avantageusement selon l'invention, la charge est du pétrole brut ou une charge issue de la distillation atmosphérique ou de la distillation sous-vide de pétrole brut, ou une fraction résiduelle issue de la liquéfaction directe de charbon ou encore un distillat sous-vide ou encore une fraction résiduelle issue de la liquéfaction directe de la biomasse ligno-cellulosique seule ou en mélange avec du charbon et/ou une fraction pétrolière résiduelle

Le procédé selon l'invention présente l'avantage de produire un effet stabilisant amélioré dans l'étape d'hydroconversion grâce à la mise en oeuvre d'une étape de désasphaltage en au moins deux étapes et de ce fait à l'isolement et au recyclage d'une coupe stabilisante (DAO lourde) plus concentrée en espèces aromatiques (résines). Un effet stabilisant augmenté permet de durcir les conditions opératoires et donc d'améliorer la conversion dans l'étape d'hydroconversion, le facteur limitant de la conversion étant la sédimentation en aval des unités d'hydroconversion.

### Description des figures

La figure 1 illustre le schéma global de l'ensemble des étapes du procédé selon l'invention.
La figure 2 illustre une partie du schéma global décrit à la figure 1, en particulier un premier mode de réalisation du désasphaltage sélectif en deux étapes.

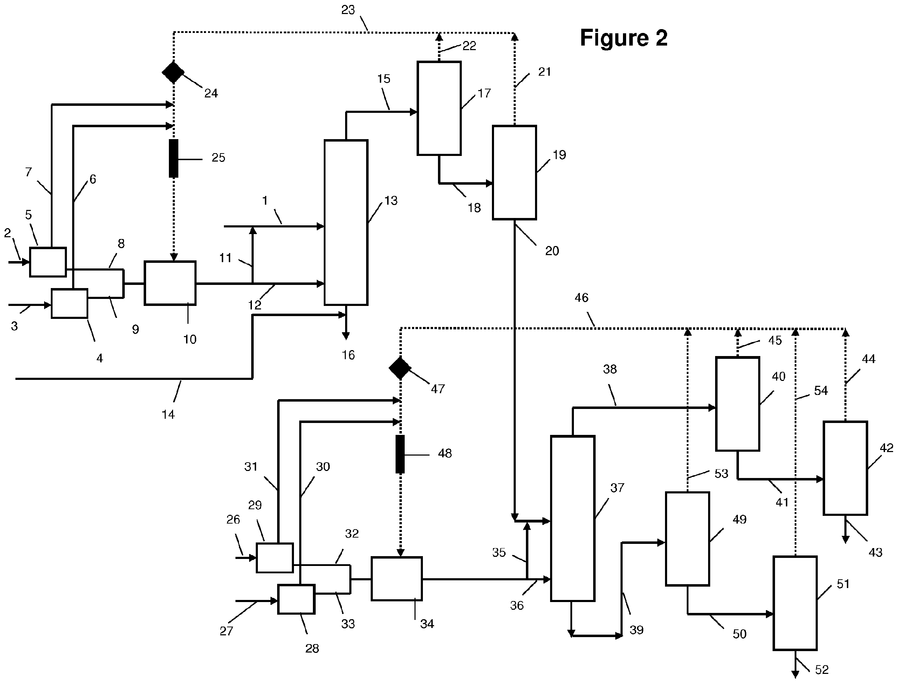

La figure 2 illustre un mode particulier de la figure 2 mettant en oeuvre une source unique de solvants.

### Description détaillée de l'invention

### La charge

La charge lourde d'hydrocarbures selon le procédé de l'invention est avantageusement une charge lourde issue de la distillation atmosphérique ou de la distillation sous-vide de pétrole brut, présentant typiquement des températures d'ébullition d'au moins 300 °C, de préférence supérieur à 450°C, et contenant des impuretés, notamment du soufre, de l'azote et des métaux. La charge peut être du pétrole brut.

La charge selon le procédé de l'invention peut être d'origine pétrolière de type résidu atmosphérique ou résidu sous-vide issu de brut dit conventionnel (degré API >20°), lourd (degré API compris entre 10 et 20°) ou extra lourd (degré API<10°).

La charge peut provenir d'origine géographique et géochimique (type I, II, IIS ou III) différentes, de degré de maturité et de biodégradation également différents.

Ladite charge peut également être une fraction résiduelle issue de la liquéfaction directe de charbon (résidu atmosphérique ou résidu sous-vide issu par exemple du procédé H-Coal™) ou encore un distillat sous-vide H-Coal™ ou encore une fraction résiduelle issue de la liquéfaction directe de la biomasse ligno-cellulosique seule ou en mélange avec du charbon et/ou une fraction pétrolière résiduelle. Ce type de charge est généralement riche en impuretés avec des taux en métaux supérieurs à 20 ppm, de préférence supérieurs à 100 ppm. La teneur en soufre est supérieure à 0,5%, préférentiellement supérieure à 1%, et de préférence supérieure à 2% poids. Le taux d'asphaltènes C7 est avantageusement supérieur à 1%, de préférence le taux d'asphaltènes C7 est compris entre 1 et 40% et de manière plus préférée entre 2 et 30% poids. Les asphaltènes C7 sont des composés connus pour inhiber la conversion de coupes résiduelles, à la fois par leur aptitude à former des résidus hydrocarbonés lourds, communément appelés coke, et par leur tendance à produire des sédiments qui limitent fortement l'opérabilité des unités d'hydrotraitement et d'hydroconversion. La teneur en carbone Conradson est supérieure à 5%, voire 35% poids. La teneur en carbone Conradson est définie par la norme ASTM D 482 et représente pour l'homme du métier une évaluation bien connue de la quantité de résidus de carbone produit après une combustion sous des conditions standards de température et de pression.

### Etape a) d'hydroconversion de la charge

Conformément à l'étape a) du procédé selon l'invention, la charge subit une étape a) d'hydroconversion en présence d'hydrogène dans au moins un réacteur triphasique, ledit réacteur contenant au moins un catalyseur d'hydroconversion et fonctionnant en lit bouillonnant, à courant ascendant de liquide et de gaz et comportant au moins un moyen de soutirage dudit catalyseur hors dudit réacteur et au moins un moyen d'appoint de catalyseur frais dans ledit réacteur, dans des conditions permettant d'obtenir une charge liquide à teneur réduite en carbone Conradson, en métaux, en soufre et en azote.

Conformément au procédé selon l'invention, au moins une partie de la coupe huile desasphaltée DAO lourde issue de l'étape c) est recyclée en amont de l'étape a) d'hydroconversion, en mélange avec ladite charge.

Dans le cas où la charge traitée dans le procédé selon l'invention est un pétrole brut, la charge pétrole brut est directement envoyée dans ladite étape a) d'hydroconversion, de préférence après un simple étêtage de sa fraction la plus légère, dont le point final est généralement compris entre 50 et 250°C, et de façon préférée entre 100 et 200°C.

Dans le cas où la charge traitée dans le procédé selon l'invention est la fraction issue de la distillation atmosphérique d'un pétrole brut, soit une fraction appelée résidu atmosphérique (RA), ledit procédé comporte avantageusement une étape de distillation atmosphérique préalable à l'étape a) d'hydroconversion.

Dans le cas où la charge traitée dans le procédé selon l'invention est la fraction issue de la distillation atmosphérique et sous vide d'un pétrole brut, soit une fraction appelée résidu sous vide (RSV), ledit procédé comporte avantageusement une étape de distillation atmosphérique suivie d'une étape de distillation sous vide préalables à l'étape a) d'hydroconversion.

L'étape a) d'hydroconversion de la charge selon l'invention est généralement effectuée dans des conditions classiques d'hydroconversion en lit bouillonnant d'une fraction hydrocarbonée liquide. On opère habituellement sous une pression absolue comprise entre 2 et 35 MPa, de préférence entre 5 et 25 MPa et de manière préférée, entre 6 et 20 MPa, à une température comprise entre 300 et 550°C et de préférence comprise entre 350 et 500°C. La vitesse spatiale horaire (VVH) et la pression partielle d'hydrogène sont des facteurs importants que l'on choisit en fonction des caractéristiques du produit à traiter et de la conversion souhaitée. De préférence, la VVH est comprise entre 0,1 h⁻¹ et 10 h⁻¹ et de manière préférée entre 0,15 h⁻¹ et 5 h⁻¹. La quantité d'hydrogène mélangée à la charge est de préférence comprise entre 50 et 5000 normaux mètres cube (Nm³) par mètre cube (m³) de charge liquide et de manière préférée, entre 100 et 2000 Nm³/m³, et de manière très préférée entre 200 et 1000 Nm³/m³.

Le catalyseur d'hydroconversion utilisé dans l'étape a) du procédé selon l'invention est avantageusement un catalyseur granulaire de taille de l'ordre de 1 mm. Le catalyseur est le plus souvent sous forme d'extrudés ou de billes. Typiquement, le catalyseur comprend un support, dont la répartition poreuse est adaptée au traitement de la charge, de préférence amorphe et de manière très préférée de l'alumine, un support silice-alumine étant aussi envisageable dans certains cas et au moins un métal du groupe VIII choisi parmi le nickel et le cobalt et de préférence le nickel, ledit élément du groupe VIII étant de préférence utilisé en association avec au moins un métal du groupe VIB choisi parmi le molybdène et le tungstène et de préférence, le métal du groupe VIB est le molybdène.

De préférence, le catalyseur d'hydroconversion comprend le nickel en tant qu'élément du groupe VIII et le molybdène en tant qu'élément du groupe VIB. La teneur nickel est avantageusement comprise entre 0,5 à 15 % exprimée en poids d'oxyde de nickel (NiO) et de préférence entre 1 à 10 % poids et la teneur en molybdène est avantageusement comprise entre 1 et 40 % exprimée en poids de trioxyde de molybdène (MoO₃), et de préférence entre 4 et 20 % poids. Ledit catalyseur peut également avantageusement contenir du phosphore, la teneur en oxyde de phosphore étant de préférence inférieure à 20 % poids et de préférence inférieure à 10 % poids.

Avantageusement, on injecte un précurseur catalytique soit avec la charge de l'unité d'hydroconversion opérant en lit bouillonnant, soit au séparateur inter-étage entre deux réacteurs, soit à l'entrée d'un des autres réacteurs.

Le catalyseur d'hydroconversion usagé peut conformément au procédé selon l'invention être en partie remplacé par du catalyseur frais par soutirage, de préférence en bas du réacteur et par introduction, soit en haut soit en bas du réacteur, de catalyseur frais ou régénéré ou réjuvéné, de préférence à intervalle de temps régulier et de manière préférée par bouffée ou de façon quasi continue. Le taux de remplacement du catalyseur d'hydroconversion usé par du catalyseur frais est avantageusement compris entre 0,01 kilogramme et 10 kilogrammes par mètre cube de charge traitée, et de préférence entre 0,3 kilogramme et 3 kilogrammes par mètre cube de charge traitée. Ce soutirage et ce remplacement sont effectués à l'aide de dispositifs permettant avantageusement le fonctionnement continu de cette étape d'hydroconversion.

Il est également avantageusement possible d'envoyer le catalyseur usé soutiré du réacteur dans une zone de régénération dans laquelle on élimine le carbone et le soufre qu'il renferme puis de renvoyer ce catalyseur régénéré dans l'étape a) d'hydroconversion. Il est également avantageusement possible d'envoyer le catalyseur usé soutiré du réacteur dans une zone de réjuvénation dans laquelle on élimine la majeure partie des métaux déposés, avant d'envoyer le catalyseur usé et réjuvéné dans une zone de régénération dans laquelle on élimine le carbone et le soufre qu'il renferme puis de renvoyer ce catalyseur régénéré dans l'étape a) d'hydroconversion.

L'étape a) du procédé selon l'invention est avantageusement mise en oeuvre dans les conditions du procédé H-Oil™ tel que décrit par exemple dans les brevets US-A-4,521,295 ou US-A-4,495,060 ou US-A-4,457,831 ou US-A-4,354,852 ou dans l'article Aiche, March 19-23, 1995, HOUSTON, Texas, paper number 46d, Second generation ebullated bed technology.

Le catalyseur d'hydroconversion utilisé dans l'étape a) d'hydroconversion permet avantageusement d'assurer à la fois la démétallation et la désulfuration, dans des conditions permettant d'obtenir une charge liquide à teneur réduite en métaux, en carbone Conradson et en soufre et permettant d'obtenir une forte conversion en produits légers c'est-à-dire en particulier en fractions carburants essence et gazole.

L'étape a) est avantageusement mise en oeuvre dans un ou plusieurs réacteurs triphasiques d'hydroconversion, de préférence un ou plusieurs réacteurs triphasiques d'hydroconversion avec des ballons décanteurs intermédiaires. Chaque réacteur comporte avantageusement une pompe de recirculation permettant le maintien du catalyseur en lit bouillonnant par recyclage continu d'au moins une partie d'une fraction liquide avantageusement soutirée en tête du réacteur et réinjecté en bas du réacteur.

### Etape b) de séparation de l'effluent issu de l'étape a)

L'effluent issu de l'étape a) d'hydroconversion subit ensuite conformément à l'étape b) du procédé selon l'invention, une étape de séparation pour obtenir une fraction liquide légère bouillant à une température inférieure à 300°C, de préférence inférieure à 350°C et de manière préférée, inférieu re à 375°C et une fraction liquide lourde bouillant à une température supérieure à 300°C, de préférence supérieure à 350°C et de manière préférée, supérieure à 375°C. C ette séparation comprend tout moyen de séparation connu par l'homme du métier. De préférence, cette séparation est réalisée par un ou plusieurs ballons de flash en série, et de manière préférée par un enchaînement de deux ballons de flash successifs.

Dans l'étape b) de séparation, les conditions sont choisies de manière à ce que le point de coupe soit de 300°C, de préférence 350°C e t de manière préférée 375°C, de manière à obtenir deux fractions liquides, une fraction dite légère, et une fraction dite lourde.

La fraction légère directement obtenue en sortie de l'étape b) de séparation est ensuite avantageusement séparée des gaz légers (H₂, H₂S, NH₃ et C₁-C₄), pour obtenir la fraction liquide légère bouillant à une température inférieure à 300°C, par tout moyen de séparation connu de l'homme du métier tel que par exemple par passage dans un ballon de flash, de manière à récupérer l'hydrogène gazeux qui est avantageusement recyclé après purification dans l'étape a) d'hydroconversion. Ladite fraction liquide légère, avantageusement séparée desdits gaz légers et bouillant à une température inférieure à 300°C, de préférence inférieure à 350°C et de manière préférée, inférieure à 375°C contient les gaz légers dissous (C5+), une fraction bouillant à une température inférieure à 150°C correspondant aux naphtas, une fraction bouillant entre 150 et 250°C correspondant à la fraction kérosène et au moins une partie de la fraction gazole bouillant entre 250 et 375°C. Ladite fraction liquide légère est avantageusement envoyée dans une étape de séparation, de préférence dans une colonne de distillation pour en séparer lesdites fractions naphta, kérosène et gazole.

La fraction liquide lourde bouillant à une température supérieure à 300°C, de préférence supérieure à 350°C et de manière préférée, supérieure à 375°C contient au moins une partie de la fraction gazole bouillant entre 250 et 375°C, une fraction bouillant entre 375 et 520°C voire 540°C appelée distillat sous vide et une fraction bouillant à une température supérieure à 520°C voire 540°C, appelée résidu sous vide non converti. La fraction liquide lourde comprend donc au moins une partie des distillats moyens et de préférence au moins une partie de la fraction gazole bouillant à une température comprise entre 250 et 375°C.

Dans une variante du procédé selon l'invention, la fraction liquide lourde est avantageuse soumise à une étape de strippage à la vapeur et/ou à l'hydrogène ou à une étape de fractionnement sous-vide avant d'être envoyée à l'étape c) de désasphaltage selon l'invention. Cette étape permet d'éliminer au moins en partie la fraction distillat sous-vide (9) ou VGO (selon la terminologie anglo-saxonne) contenue dans la fraction liquide lourde. Dans le cas où l'étape de fractionnement sous-vide est réalisée, cette dernière est réalisée de préférence dans une colonne de distillation sous vide permettant de séparer une fraction liquide lourde bouillant à une température supérieure à 400°C.

### Etape c) de désasphaltage sélectif de la fraction liquide lourde issue de l'étape b)

Conformément au procédé selon l'invention, au moins une partie de la fraction liquide lourde bouillant à une température supérieure à 300°C, de préférence supérieure à 350°C et de manière préférée, supérieure à 375°C vo ire supérieure à 400°C issue de l'étape b) est soumise à au moins deux étapes de désasphaltage en série permettant de séparer au moins une fraction asphalte, au moins une fraction d'huile désasphaltée lourde, dite DAO lourde et au moins une fraction d'huile désasphaltée légère, dite DAO légère, au moins une desdites étapes de désasphaltage étant réalisée au moyen d'un mélange d'au moins un solvant polaire et d'au moins un solvant apolaire, lesdites étapes de désasphaltage étant mises en oeuvre dans les conditions subcritiques du mélange des solvants utilisé.

Les proportions dudit solvant polaire et dudit solvant apolaire du mélange de solvant sont ajustées selon les propriétés de la charge traitée et selon le rendement en asphalte et/ou la qualité de la DAO souhaité (e)(s).

Dans une variante, ladite étape c) est mise en oeuvre sur au moins une partie de la fraction lourde préalablement soumise à une étape de strippage à la vapeur et/ou à l'hydrogène ou à une étape de fractionnement sous-vide.

Dans la suite du texte et dans ce qui précède, l'expression "mélange de solvant selon l'invention" est entendue comme signifiant un mélange d'au moins un solvant polaire et d'au moins un solvant apolaire selon l'invention.

Le désasphaltage sélectif mis en oeuvre dans l'étape c) permet d'aller plus loin dans le maintien de la solubilisation dans la matrice huile de tout ou partie des structures polaires des résines lourdes et des asphaltènes qui sont les principaux constituants de la phase asphalte dans le cas du désasphaltage classique. L'invention permet ainsi de choisir quel type de structures polaires restent solubilisées dans la matrice huile. Par conséquent, le désasphaltage sélectif mis en oeuvre dans l'invention permet de n'extraire sélectivement de la charge qu'une partie de cet asphalte, c'est à dire les structures les plus polaires et les plus réfractaires dans les procédés de conversion et de raffinage. Le procédé selon l'invention permet, grâce à des conditions de désasphaltage spécifiques, une plus grande flexibilité dans le traitement des charges en fonction de leur nature mais également en fonction de la qualité et/ou le rendement en huile désasphaltée DAO lourde et/ou huile désasphaltée DAO légère souhaités. Par ailleurs, les conditions de désasphaltage selon l'invention permettent de s'affranchir des limitations de rendement en huile désasphaltée DAO imposées par l'utilisation de solvants paraffiniques.

L'asphalte extrait lors du désasphaltage selon l'invention correspond à l'asphalte ultime composé essentiellement de structures moléculaires polyaromatiques et/ou hétéroatomiques réfractaires en raffinage. Il en résulte un rendement en huile désasphaltée valorisable amélioré.

L'étape c) de désasphaltage sélectif peut-être réalisée dans une colonne d'extraction, ou dans un mélangeur-décanteur. De préférence, le mélange de solvants selon l'invention est introduit dans une colonne d'extraction ou un mélangeur-décanteur, à deux niveaux différents. De préférence, le mélange de solvants selon l'invention est introduit dans une colonne d'extraction ou un mélangeur-décanteur, à un seul niveau d'introduction. Cette étape est réalisée par extraction liquide/liquide en au moins deux étapes de désasphaltage en série.

Selon l'invention, l'extraction liquide/liquide des étapes de désasphaltage est mise en oeuvre en conditions subcritiques pour ledit mélange de solvants, c'est-à-dire à une température inférieure à la température critique du mélange de solvants. Lorsqu'un seul solvant, de préférence un solvant apolaire, est mis en oeuvre, l'étape de désasphaltage est mise en oeuvre en conditions subcritiques pour ledit solvant, c'est-à-dire à une température inférieure à la température critique dudit solvant. La température d'extraction est avantageusement comprise entre 50 et 350°C, de préférence entre 90 et 320°C, de manière plus préférée entre 100 et 310°C, de manière encore plus préférée entre 120 et 310°C, d e manière encore plus préférée entre 150 et 310°C et la pression est avantageuseme nt comprise entre 0,1 et 6 MPa, de préférence entre 2 et 6 MPa.

Le rapport de volume du mélange de solvants selon l'invention (volume de solvant polaire+volume de solvant apolaire) sur la masse de charge est généralement compris entre 1/1 et 10/1, de préférence entre 2/1 à 8/1 exprimé en litres par kilogrammes.

Avantageusement selon le procédé de l'invention, le point d'ébullition du solvant polaire du mélange de solvants selon l'invention est supérieur au point d'ébullition du solvant apolaire.

Le solvant polaire utilisé peut être choisi parmi les solvants aromatiques purs ou napthéno-aromatiques, les solvants polaires comportant des hétéro-éléments, ou leur mélange. Le solvant aromatique est avantageusement choisi parmi les hydrocarbures monoaromatiques, de préférence le benzène, le toluène ou les xylènes seuls ou en mélange; les diaromatiques ou polyaromatiques; les hydrocarbures naphténo-hydrocarbures aromatiques tels que la tétraline ou l'indane; les hydrocarbures aromatiques hétéroatomiques (oxygénés, azotés, soufrés) ou tout autre famille de composés présentant un caractère plus polaire que les hydrocarbures saturés comme par exemple le diméthylsulfoxyde (DMSO), le diméthyl le formamide (DMF), le tetrahydrofurane (THF). Le solvant polaire utilisé dans le procédé selon l'invention peut être également une coupe riche en aromatiques. Les coupes riches en aromatiques selon l'invention peuvent être par exemple des coupes issues du FCC (Fluid Catalytic Cracking) telles que l'essence lourde ou le LCO (LCO (light cycle oil). Citons également les coupes dérivées du charbon, de la biomasse ou de mélange biomasse/charbon avec éventuellement une charge pétrolière résiduelle après conversion thermochimique avec ou sans hydrogène, avec ou sans catalyseur. On peut également utiliser des coupes pétrolières légères type naphta, de préférence des coupes pétrolières légères type naphta straight-run. De manière préférée, le solvant polaire utilisé est un hydrocarbure monoaromatique pur ou en mélange avec un autre hydrocarbure aromatique.

Le solvant apolaire utilisé dans le procédé selon l'invention est de préférence un solvant composé d'hydrocarbure(s) saturé(s) comprenant un nombre de carbone supérieur ou égal à 2, de préférence compris entre 2 et 9. Ces solvants sont utilisés purs ou en mélange (par exemple: mélange d'alcanes et /ou de cycloalcanes ou bien de coupes pétrolières légères type naphta, de préférence des coupes pétrolières légères type naphta straight-run).

Le choix des conditions de température et de pression de l'extraction selon l'invention combiné au choix de la nature des solvants et au choix de la combinaison de solvants apolaire et polaire dans au moins une des étapes de désasphaltage permettent d'ajuster les performances du procédé selon l'invention pour accéder notamment à un domaine de sélectivité jusque là inaccessible avec le désasphaltage classique.

Dans le cas de la présente invention, l'optimisation de ces clefs de réglage (nature des solvants, proportions relatives des solvants polaire et apolaire) permet de séparer la charge en trois fractions: une fraction asphalte dite ultime enrichie en impuretés et en composés réfractaires à la valorisation, une phase huile désasphaltée lourde dite DAO lourde enrichie en structures des résines et des asphaltènes les moins polaires non réfractaires et une phase huile désasphaltée légère dite DAO légère appauvrie en résines et asphaltènes, et généralement en impuretés (métaux, hétéroatomes). Ceci permet, par ailleurs, d'augmenter le caractère aromatique de la phase huile désasphaltée lourde dite DAO lourde dont le recyclage en amont de l'étape d'hydroconversion permet une meilleure stabilisation du milieu traité en lit bouillonnant par un effet solubilisant et/ou peptisant et/ou dispersant des structures moléculaires propices à la formation des sédiments. De ce fait, il est possible d'imposer des conditions opératoires plus sévères dans l'étape d'hydroconversion, et d'atteindre ainsi des niveaux de conversions de la fraction résiduelle supérieurs.

Avantageusement, la proportion de solvant polaire dans le mélange de solvant polaire et de solvant apolaire est comprise entre 0,1 et 99,9%, de préférence entre 0,1 et 95%, de manière préférée entre 1 et 95%, de manière plus préférée entre 1 et 90%, de manière encore plus préférée entre 1 et 85%, et de manière très préférée entre 1 et 80%.

La proportion de solvant polaire dans le mélange de solvant polaire et apolaire est fonction de la nature de la fraction liquide lourde, les structures moléculaires composant la fraction liquide lourde variant d'une fraction liquide lourde à une autre.

Toutes les fractions liquides lourdes ne présentent pas un caractère réfractaire identique. Le taux d'asphalte à extraire n'est pas forcément le même en fonction de la nature de la fraction liquide lourde.

La nature de la fraction liquide lourde, dépend également de l'origine pétrolière issue du charbon ou de type biomasse de la charge selon l'invention.

L'étape c) de désasphaltage sélectif présente l'avantage de permettre une amélioration considérable du rendement total en huile désasphaltée DAO sur toute une gamme jusque là inexplorée par le désasphaltage classique. Pour une fraction liquide lourde donnée dont le rendement total en huile désasphaltée DAO lourde et huile désasphaltée DAO légère obtenu est plafonné à 75% (extraction au normal heptane), le désasphaltage sélectif permet de couvrir par ajustement de la proportion solvant polaire et de solvant apolaire la gamme 75-99,9% de rendement en huile désasphaltée DAO lourde et légère.

Le rendement total en huile désasphaltée DAO lourde et huile désasphaltée DAO légère est avantageusement comprise 50 et 99,9%, de préférence entre 75 et 99,9%, de manière plus préférée entre 80 et 99,9%.

Un autre avantage selon l'invention est de permettre, grâce au désasphaltage sélectif selon l'étape c), la réduction de la fraction asphalte dont le rendement peut être largement plus bas par rapport à la mise en oeuvre d'un désasphaltage classique, pour une charge donnée. Selon le procédé selon l'invention, ce rendement est réduit à la fourchette 0,1 à 30% en fonction du rapport solvant apolaire / polaire. Il est d'autant plus réduit que la proportion en solvant polaire dans le mélange est élevée. En conséquence, le domaine d'extraction de l'asphalte avec un rendement dans la gamme 0,1-50%, particulièrement 0,1-30%, de manière préférée 0,1-25%, de manière plus préférée 0,1-15% est désormais couvert. Il est fonction de la sélectivité désirée pour une charge donnée ainsi que de la nature de la charge. Ceci est un point d'intérêt sachant que le coût très faible de la valorisation de l'asphalte (fraction pénalisante) constitue toujours une véritable limitation pour les schémas incluant ce type de procédé.

Le caractère plus aromatique de l'huile désasphaltée lourde dite DAO lourde issue de l'étape c), permet de l'utiliser pour ses propriétés de stabilisation des asphaltènes C7 contenues dans la charge, dans les zones à risque de sédimentation telle que le lit bouillonnant, la zone de séparation entre lit bouillonnant et l'étape c) de désasphaltage. L'huile désasphaltée lourde dite DAO lourde peut être recyclée en entrée du premier réacteur de l'unité à lit bouillonnant, mais également directement à l'entrée d'un des autres réacteurs avec des conditions opératoires dissociées entre les différents réacteurs.

Selon le procédé de l'invention, la nature du solvant et/ou la proportion et/ou la polarité intrinsèque du solvant polaire dans le mélange de solvant peut être ajustée suivant que l'on désire extraire l'asphalte lors de la première étape de désasphaltage ou lors de la deuxième étape de désasphaltage.

Dans un premier mode de réalisation, l'étape c) du procédé selon l'invention est mise en oeuvre dans une configuration dite de polarité décroissante, c'est-à-dire que la polarité du mélange de solvants utilisé lors de la première étape de désasphaltage est supérieure à celle du solvant ou mélange de solvants utilisé lors de la deuxième étape de désasphaltage. Cette configuration permet d'extraire lors de la première étape de désasphaltage une fraction de phase asphalte dite ultime et une fraction huile désasphaltée complète dite DAO complète; les deux fractions dites huile désasphaltée lourde et huile désasphaltée légère étant extraites de la DAO complète lors de la deuxième étape de désasphaltage.

Dans un second mode de réalisation, l'étape c) du procédé selon l'invention est mise en oeuvre dans une configuration dite de polarité croissante, c'est-à-dire que la polarité du solvant ou mélange de solvants utilisé lors de la première étape de désasphaltage est inférieure à celle du mélange de solvants utilisé lors de la deuxième étape de désasphaltage. Dans une telle configuration, on extrait lors de la première étape une fraction d'huile désasphaltée dite légère et un effluent comprenant une phase huile et une phase asphalte; ledit effluent étant soumis à une deuxième étape de désasphaltage pour extraire une fraction de phase asphalte et une fraction de phase huile désasphaltée lourde dite DAO lourde.

### Premier mode de réalisation

Selon ce mode de réalisation, le procédé selon l'invention comprend au moins :
c1) une première étape de désasphaltage comprenant la mise en contact de la fraction liquide lourde avec un mélange d'au moins un solvant polaire et d'au moins un solvant apolaire, les proportions dudit solvant polaire et dudit solvant apolaire étant ajustées de manière à obtenir au moins une fraction de phase asphalte et une fraction de phase huile désasphaltée complète dite DAO complète; et
c2) une deuxième étape de désalphatage comprenant la mise en contact de la phase huile désasphaltée complète dite DAO complète issue de l'étape c1) avec soit un solvant apolaire soit un mélange d'au moins un solvant polaire et d'au moins un solvant apolaire, les proportions dudit solvant polaire et dudit solvant apolaire dans le mélange étant ajustées de manière à obtenir au moins une fraction de phase huile désasphaltée légère dite DAO légère et une fraction de phase huile désasphaltée lourde dite DAO lourde,
lesdites étapes de désasphaltage étant mises en oeuvre dans les conditions subcritiques du solvant ou du mélange de solvants utilisé.

La première étape de désasphaltage permet ainsi d'extraire sélectivement et ce, de manière optimale et adaptée à chaque fraction liquide lourde, une fraction asphalte dite ultime, enrichie en impuretés et en composés réfractaires à la valorisation, tout en laissant solubilisée dans la matrice huile désasphaltée complète dite DAO complète tout ou partie des structures polaires des résines lourdes et des asphaltènes les moins polaires, qui elles, ne sont pas réfractaires pour les étapes de raffinage en aval. Ainsi, selon la proportion de solvant apolaire/polaire, le rendement en DAO peut être considérablement amélioré et de fait le rendement en asphalte considérablement minimisé. Ceci est un point d'intérêt sachant que la valorisation de l'asphalte (fraction pénalisante) constitue toujours une véritable limitation pour les schémas incluant ce type de procédé.

L'huile désasphaltée DAO complète issue de l'étape c1) avec au moins en partie le mélange de solvants selon l'invention est de préférence soumise à au moins une étape de séparation dans laquelle l'huile désasphaltée complète dite DAO complète est séparée du mélange de solvants selon l'invention ou au moins une étape de séparation dans laquelle l'huile désasphaltée complète dite DAO complète est séparée uniquement du solvant apolaire.

Dans une variante du procédé, l'huile désasphaltée complète dite DAO complète issue de l'étape c1) avec au moins en partie le mélange de solvants selon l'invention est soumise à au moins deux étapes de séparation successives permettant de séparer individuellement les solvants dans chaque étape. Ainsi, par exemple, dans une première étape de séparation le solvant apolaire est séparé du mélange d'huile désasphaltée complète dite DAO complète et de solvant polaire; et dans une deuxième étape de séparation le solvant polaire est séparé de l'huile désasphaltée complète dite DAO complète.

Les étapes de séparation sont réalisées dans des conditions supercritiques ou subcritiques.

A l'issue de l'étape de séparation, l'huile désasphaltée complète dite DAO complète séparée des solvants est avantageusement envoyée dans au moins une colonne de strippage avant d'être envoyée dans la deuxième étape (étape c2) de désasphaltage.

Le mélange de solvants polaire et apolaire ou les solvants individuellement séparés sont avantageusement recyclés. Dans une variante du procédé seul le solvant apolaire est recyclé dans son bac d'appoint respectif. Lorsque les solvants recyclés sont en mélange, la proportion apolaire/polaire est vérifiée en ligne et réajustée au besoin via des bacs d'appoint contenant individuellement les solvants polaire et apolaire. Lorsque les solvants sont individuellement séparés, lesdits solvants sont individuellement recyclés vers lesdits bacs d'appoint respectifs.

La phase asphalte séparée de la première étape de désasphaltage est de préférence à l'état liquide et est généralement diluée au moins en partie avec une portion du mélange de solvants selon l'invention, dont la quantité peut aller jusqu'à 200%, de préférence entre 30 et 80% du volume d'asphalte soutiré. L'asphalte extrait avec au moins en partie le mélange de solvants polaire et apolaire à l'issue de l'étape d'extraction peut être mélangé avec au moins un fluxant de manière à être soutirée plus facilement. Le fluxant utilisé peut être tout solvant ou mélange de solvant pouvant solubiliser ou disperser l'asphalte. Le fluxant peut être un solvant polaire choisi parmi les hydrocarbures monoaromatiques, de préférence le benzène, le toluène ou le xylène; les diaromatiques ou polyaromatiques; les hydrocarbures naphténo-hydrocarbures aromatiques tels que la tétraline ou l'indane; les hydrocarbures aromatiques hétéroatomiques; les solvants polaires à poids moléculaire correspondant à des températures d'ébullition comprises par exemple entre 200°C et 600°C telles que un LCO (light cycle oil de FCC), un HCO (Heavy cycle oil de FCC), slurry de FCC, HCGO (heavy coker gas-oil), ou un extrait aromatique ou une coupe extra-aromatique extraite d'une chaine huile, les coupes VGO issues d'une conversion de fractions résiduelles et/ou de charbon et/ou de biomasse. Le rapport de volume de fluxant sur la masse de l'asphalte est déterminé de manière à ce que le mélange puisse être facilement soutiré.

La deuxième étape de désasphaltage peut être mise en oeuvre sur au moins une partie de l'huile désasphaltée complète dite DAO complète issue de la première étape de désasphaltage en présence d'un mélange d'au moins un solvant polaire et d'au moins un solvant apolaire dans les conditions subcritiques pour le mélange de solvants utilisé. La deuxième étape de désasphaltage peut être également mise en oeuvre sur au moins une partie de l'huile désasphaltée complète dite DAO complète issue de la première étape de désasphaltage en présence d'un solvant apolaire dans les conditions subcritiques pour le solvant utilisé. La polarité dudit solvant ou mélange de solvants est de préférence inférieure à celle du mélange de solvant utilisé dans la première étape de désasphaltage. Cette extraction est effectuée de manière à obtenir une phase précipitée huile désasphaltée lourde dite DAO lourde (présentant un caractère aromatique élevé) comprenant majoritairement la famille des résines et des asphaltènes les moins polaires, dont au moins une partie est envoyée en amont de l'étape a) d'hydroconversion et une phase huile désasphaltée légère dite DAO légère comprenant majoritairement la famille des hydrocarbures saturés et la famille des hydrocarbures aromatiques.
Au moins une partie de la fraction huile désasphaltée légère dite DAO légère est avantageusement envoyée vers des unités de post-traitement telles qu'une unité d'hydrotraitement et/ou d'hydrocraquage, ou de craquage catalytique.

### Second mode de réalisation

Dans un second mode de réalisation, le procédé selon l'invention comprend au moins :
c'1) une première étape de désasphaltage comprenant la mise en contact de la fraction liquide lourde avec soit un solvant apolaire, soit un mélange d'au moins un solvant polaire et d'au moins un solvant apolaire, les proportions dudit solvant polaire et dudit solvant apolaire du mélange étant ajustées de manière à obtenir au moins une fraction de phase huile désasphaltée légère dite DAO légère et un effluent comprenant une phase huile et une phase asphalte; et
c'2) une deuxième étape de désasphaltage comprenant la mise en contact de l'effluent issu de l'étape c'1) avec un mélange d'au moins un solvant polaire et d'au moins un solvant apolaire, les proportions dudit solvant polaire et dudit solvant apolaire étant ajustées de manière à obtenir au moins une fraction de phase asphalte et une fraction de phase huile désasphaltée lourde dite DAO lourde,
lesdites étapes de désasphaltage étant mises en oeuvre dans les conditions subcritiques du solvant ou du mélange de solvants utilisé.

Dans le présent mode de réalisation, l'ordre d'extraction des catégories de produits est inversé: la polarité du solvant ou du mélange de solvant utilisé dans la première étape de désasphaltage est inférieure à celle du mélange de solvants utilisé dans la deuxième étape de désasphaltage.

La première étape de désasphaltage permet ainsi d'extraire sélectivement de la fraction liquide lourde une fraction huile désasphaltée légère dite DAO légère et un effluent comprenant une phase huile et une phase asphalte. La première étape de désasphaltage (étape c'1) peut être mise en oeuvre aussi bien sur un solvant apolaire que sur un mélange de solvant selon l'invention. La nature, la proportion et/ou la polarité du solvant polaire dans le mélange de solvant est adaptée, dans les conditions subcritiques du solvant ou du mélange de solvants utilisé, de manière à extraire une fraction huile désasphaltée légère comprenant majoritairement la famille des hydrocarbures saturés et la famille des hydrocarbures aromatiques.

Au moins une partie de la fraction huile désasphaltée légère dite DAO légère est avantageusement envoyée vers des unités de post-traitement telles que une unité d'hydrotraitement et/ou d'hydrocraquage, ou de craquage catalytique.

L'effluent comprenant une phase huile désasphaltée lourde dite DAO lourde et une phase asphalte extrait de la première étape de désasphaltage peut contenir au moins en partie le solvant apolaire ou le mélange de solvants selon l'invention. Avantageusement selon l'invention, ledit effluent est soumis à au moins une étape de séparation dans laquelle il est séparé du solvant apolaire ou du mélange de solvants selon l'invention,
ou au moins une étape de séparation dans lequel ledit effluent est séparé uniquement du solvant apolaire contenu dans le mélange de solvants.

Dans une variante du procédé selon l'invention, ledit effluent peut être soumis à au moins deux étapes de séparation successives permettant de séparer individuellement les solvants dans chaque étape de séparation (tel que décrit dans le premier mode de réalisation de l'invention).

Les étapes de séparation sont réalisées dans des conditions supercritiques ou subcritiques.
A l'issue de l'étape de séparation, l'effluent comprenant la phase huile désasphaltée lourde dite DAO lourde et la phase asphalte séparé du solvant ou du mélange de solvants selon l'invention peut être envoyé dans au moins une colonne de strippage avant d'être envoyé dans la deuxième étape de désasphaltage.
Le mélange de solvants polaire et apolaire ou les solvants individuellement séparés sont avantageusement recyclés. Dans une variante du procédé seul le solvant apolaire est recyclé dans son bac d'appoint respectif. Lorsque les solvants recyclés sont en mélange, la proportion des solvants apolaire et polaire est vérifiée en ligne et réajustée au besoin via des bacs d'appoint contenant individuellement lesdits solvants polaire et apolaire. Lorsque les solvants sont individuellement séparés, lesdits solvants sont individuellement recyclés vers lesdits bacs d'appoint respectifs.
La deuxième étape de désasphaltage est mise en oeuvre sur l'effluent comprenant une phase huile désasphaltée lourde dite DAO lourde et une phase asphalte issue de la première étape de désasphaltage en présence d'un mélange d'au moins un solvant polaire et d'au moins un solvant apolaire dans les conditions subcritiques pour le mélange de solvants utilisé. La polarité dudit mélange de solvants est de préférence supérieure à celle du solvant ou du mélange de solvant utilisé dans la première étape de désasphaltage. Cette extraction est effectuée de manière à extraire sélectivement de l'effluent, une fraction asphalte dite ultime, enrichie en impuretés et en composés réfractaires à la valorisation, tout en laissant solubilisée dans la matrice huile désasphaltée lourde dite DAO lourde tout ou partie des structures polaires des résines et des asphaltènes les moins polaires restant généralement contenues dans la fraction asphalte dans le cas de désasphaltage classique. Au moins une partie de ladite huile désasphaltée lourde dite DAO lourde présentant un caractère aromatique élevé est envoyée en amont de l'étape a) d'hydroconversion.

### Etape d) de recyclage de la coupe huile desasphaltée lourde dite DAO lourde

Conformément au procédé selon l'invention, au moins une partie de ladite coupe huile desasphaltée lourde dite DAO lourde issue de l'étape c) est recyclée en amont de l'étape a) d'hydroconversion. La partie de la coupe huile désasphaltée lourde dite DAO lourde non recyclée en amont de l'étape a) d'hydroconversion et/ou à l'entrée de l'étape b) de séparation peut avantageusement être envoyée, éventuellement en mélange avec au moins une partie et de préférence la totalité de la fraction liquide légère issue de l'étape b) dans des unités de post-traitement telles que par exemple une unité d'hydrotraitement et/ou d'hydrocraquage, ou de craquage catalytique et/ou avec au moins une partie de l'huile désasphaltée légère dite DAO légère issue de l'étape c) dans des unités de post-traitement.

### Description des figures

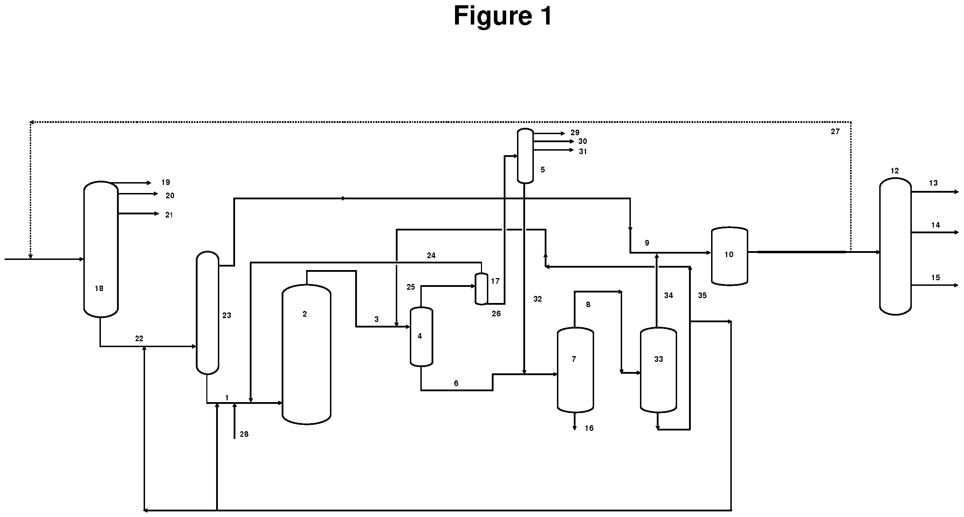

La figure 1 représente le schéma global de l'ensemble des étapes du procédé selon l'invention selon le premier mode de réalisation. La charge issue d'une colonne de distillation sous-vide (23) et ayant une température initiale d'ébullition d'au moins 300°C est envoyée par la conduite (1) dans une unité d'hydroconversion (2) opérant en lit bouillonnant.

L'effluent obtenu à l'issue de l'étape d'hydroconversion (sortant par la conduite 3) est séparé dans la zone de séparation (4) par strippage à la vapeur et/ou à l'hydrogène ou par fractionnement sous-vide. Dans la zone de séparation (4), les conditions sont généralement choisies de manière à ce que le point de coupe soit de 300°C, de préférence 350°C et de manière préférée 375°C, de manière à obtenir deux fractions liquides, une fraction dite légère (conduite 25), et une fraction dite lourde (conduite 6), sans étape de distillation atmosphérique et sous vide intermédiaire.

La fraction liquide légère est avantageusement envoyée par la conduite 25 vers un ballon séparateur (17) pour en séparer une fraction riche en hydrogène (conduite 24) et une fraction liquide légère (conduite 26). Ladite fraction liquide est avantageusement envoyée vers une colonne atmosphérique dédiée (5) pour en séparer une fraction essence (29), une fraction kérosène (30), une fraction gazole (31). La fraction riche en hydrogène (conduite 24) est avantageusement renvoyée à l'entrée de l'unité d'hydroconversion (2).
Les colonnes de distillation (5), (18) et (23) permettent de séparer les fractions gaz, essence (19), kérosène (20), gazole (21), distillat sous-vide (9) ou (VGO selon la terminologie anglo-saxonne); et résidu sous-vide (1) ou (VR selon la terminologie anglo-saxonne).
La fraction liquide lourde est ensuite envoyée par la conduite (6) dans une unité de désasphaltage sélectif en deux étapes (7 et 33) selon l'invention pour obtenir une coupe huile désasphaltée légère dite DAO légère (conduite 34), une coupe huile désasphaltée lourde dite DAO lourde (conduite 35) et de l'asphalte résiduel (conduite 16).
La coupe huile désasphaltée lourde dite DAO lourde est avantageusement au moins en partie, de préférence en totalité renvoyée à l'entrée de la zone d'hydroconversion (2).
L'huile désasphaltée légère dite DAO légère est envoyée à des unités de post-traitement (10) à savoir une unité d'hydrocraquage dans une optique de maximisation de la coupe distillat moyen et/ou dans une unité de craquage catalytique avec ou sans prétraitement dans une optique de maximisation de la coupe essence.
L'huile désasphaltée légère dite DAO légère peut être combinée avec le flux (9) qui contient la fraction distillat sous-vide (VGO) issue de la colonne (23) avec éventuellement une partie de l'huile désasphaltée DAO lourde dans le cas ou cette dernière est recyclée en amont de cette même colonne (23). L'ensemble du flux ainsi obtenu subit la même séquence de post traitement que l'huile désasphaltée légère dite DAO légère.

L'effluent issu de l'unité d'hydrocraquage ou de craquage catalytique est avantageusement envoyé dans une colonne de distillation atmosphérique de la section de post-traitement (12) de manière à récupérer les différentes coupes valorisables. La coupe essence est récupérée par la conduite (13), la coupe distillat moyen par la conduite (14) et une fraction plus lourde de charge hydroconvertie par la conduite (15). L'effluent issu de l'unité d'hydrocraquage ou de craquage catalytique peut également au moins en partie être renvoyé par la conduite 27 à la colonne de distillation atmosphérique d'entrée (18).

Le flux (28) permet l'injection éventuelle d'un précurseur catalytique. Ce précurseur catalytique peut être envoyé soit avec la charge du lit bouillonnant avant le premier réacteur, soit au séparateur inter-étage entre deux réacteurs, soit à l'entrée d'un des autres réacteurs. Le précurseur catalytique peut également être injecté de manière différenciée à ces différents endroits de la section réactionnelle afin d'optimiser son efficacité et sa consommation liées aux conditions opératoires du milieu dans lequel il est mis en oeuvre et notamment le niveau thermique des réacteurs.

La figure 2 représente une partie du schéma global décrit à la figure 1, en particulier un premier mode de réalisation du désasphaltage sélectif en deux étapes. La fraction liquide lourde issue d'un strippage à la vapeur ou à l'hydrogène ou de fractionnement sous-vide en sortie de l'unité d'hydroconversion entre ici par la conduite (1) dans le premier extracteur (13) telle qu'une colonne d'extraction, de préférence un mélangeur-décanteur. Le mélange de solvant polaire (3) et de solvant apolaire (2) est réalisé en amont dans un mélangeur (10) alimenté par deux bacs d'appoint remplis chacun séparément de solvant polaire (bac 4) et de solvant apolaire (bac 5). Le mélange de solvants est de préférence introduit au fond de l'extracteur (13) par la conduite 12. Une partie du mélange de solvants peut également être envoyée par la conduite 11 en mélange avec la charge introduite dans l'extracteur (13) par la conduite 1.

A l'issue de l'étape d'extraction, l'huile désasphaltée complète dite DAO complète extraite en mélange avec au moins en partie du mélange de solvants selon l'invention est envoyée par la conduite 15 vers un séparateur (17) dans lequel l'huile désasphaltée complète dite DAO complète est séparée du solvant selon l'invention. Ledit mélange est avantageusement séparé dans le séparateur en conditions supercritiques ou subcritiques. L'huile désasphaltée complète dite DAO complète est ensuite de préférence envoyée dans une unité ou colonne de strippage (19) par la conduite 18, avant d'être récupérée par la conduite 20.

Le solvant (22) issu du séparateur (17) est combiné au solvant (21) issu du stripper (19) est avantageusement recyclé en interne au procédé d'extraction par la ligne (23). La composition du mélange de solvants polaire et apolaire est de préférence vérifiée en ligne par un densimètre ou un réfractomètre (24). Les proportions de solvant polaire et de solvant apolaire sont, au besoin, réajustées avec un appoint de solvant polaire et de solvant apolaire respectivement acheminés des bacs d'appoint 4 et 5 par les conduites 6 et 7. Le mélange ainsi réajusté est avantageusement homogénéisé dans un mélangeur de type statique (25) avant d'être envoyé dans le mélangeur (10).

Selon la figure 2, l'asphalte (16) contenant également le mélange de solvants selon l'invention est soutiré de l'extracteur (13) sous forme d'un mélange liquide ou sous forme d'un solide dispersé à l'aide d'un fluxant envoyé par la conduite 14. Le mélange d'asphalte, de solvant selon l'invention et de fluxant est ensuite envoyé par la conduite 16 vers une étape de séparation supplémentaire non représentée.

L'extraction de l'asphalte peut être opérée de différentes manières. Dans une variante, l'asphalte peut être extrait en batch sous forme solide via deux ballons en parallèle comme dans le système de récupération du coke (delayed coker selon la terminologie anglo-saxonne). L'asphalte peut ainsi être accumulé alternativement dans les ballons et récupéré mécaniquement par ouverture des capacités. Dans une autre variante, l'asphalte est solidifié par floculation dans de l'eau; l'asphalte recueilli est ainsi prêt au transport et/ou au stockage.

Dans une autre variante, l'asphalte est soutiré de l'extracteur en mode slurry. L'asphalte solide est alors véhiculé par un fluide différent du solvant et du fluxant. La séparation de l'asphalte dudit fluide est effectuée par filtration. On utilise avantageusement au moins un fluide développant un pouvoir solvant de l'asphalte en conditions supercritiques. La séparation de l'asphalte et du fluide se fait par la suite en se plaçant avantageusement dans des conditions subcritiques ou supercritiques.

Dans une autre variante, l'asphalte est extrait en mélange avec au moins une partie du mélange de solvants avec ou sans l'ajout de fluxant. Le mélange de solvants est avantageusement séparé de l'asphalte fluxé ou non. L'asphalte fluxé ou non est ensuite valorisé.

La deuxième étape de désasphaltage sélectif consiste à envoyer l'huile désasphaltée complète dite DAO complète dans un deuxième extracteur 37 telle qu'une colonne d'extraction, de préférence un mélangeur-décanteur. Le mélange de solvant polaire (27) et de solvant apolaire (26) est réalisé en amont dans un mélangeur (34) alimenté par deux bacs d'appoint remplis chacun séparément de solvant polaire (bac 28) et de solvant apolaire (bac 29). Le mélange de solvants est de préférence introduit en fond de l'extracteur (37) par la conduite 36.

A l'issue de la deuxième étape d'extraction, l'huile désasphaltée légère dite DAO légère extraite en mélange avec au moins en partie du mélange de solvants selon l'invention est envoyée par la conduite 38 vers un séparateur (40) dans lequel l'huile désasphaltée DAO légère est séparée du solvant selon l'invention.

Ledit mélange est avantageusement séparé dans le séparateur en conditions supercritiques ou subcritiques. L'huile désasphaltée légère dite DAO légère est ensuite de préférence envoyée dans une unité ou colonne de strippage (42) par la conduite 41, avant d'être récupérée par la conduite 43. Le solvant issu du stripper est envoyé vers la ligne 46 par la conduite 44.

Selon la figure 2, l'huile désasphaltée lourde dite DAO lourde contenant également le mélange de solvants selon l'invention est soutiré de l'extracteur (37) sous forme d'un mélange liquide. Le mélange d'huile désasphaltée lourde dite DAO lourde et de solvant selon l'invention est ensuite envoyé par la conduite 39 vers un séparateur 49 puis une colonne de stripage (51) dans lesquels l'huile désasphaltée lourde dite DAO lourde et le solvant sont séparés selon l'invention. L'huile désasphaltée lourde dite DAO lourde est récupérée par la conduite 52 et le mélange de solvants selon l'invention est envoyé vers la ligne 46 par les conduites 53 et 54.

Le solvant issu des séparateurs (40,49) et des strippers (42,51) est avantageusement recyclé en interne au procédé d'extraction par la ligne (46). La composition du mélange de solvants polaire et apolaire est de préférence vérifiée en ligne par un densimètre ou un réfractomètre (47). Les proportions de solvant polaire et de solvant apolaire sont, au besoin, réajustées avec un appoint de solvant polaire et de solvant apolaire respectivement acheminés des bacs d'appoint 28 et 29 par les conduites 30 et 31. Le mélange ainsi réajusté est avantageusement homogénéisé dans un mélangeur de type statique (48) avant d'être envoyé dans le mélangeur (34).

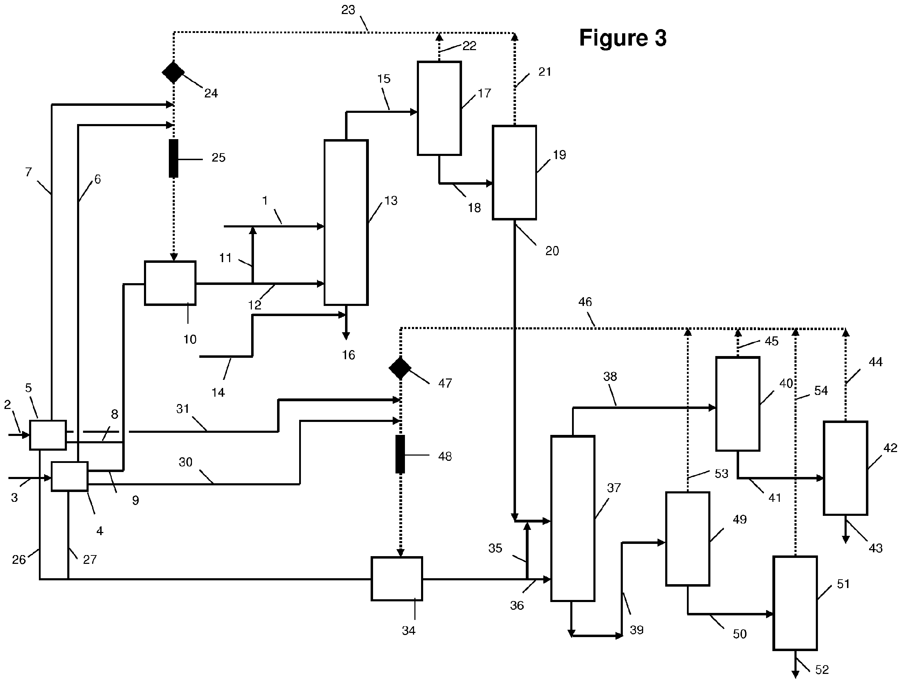

La figure 3 décrit un mode de réalisation identique à celui décrit à la figure 2, à la différence que le mode de réalisation décrit à la figure 3 met en oeuvre une source unique de solvants apolaire et polaire pour les deux extracteurs, représentés ici par les bacs d'appoint 4 et 5 qui alimentent les mélangeurs (10, 34) par les conduites 8 et 9; et/ou servent à réajuster les proportions de solvant polaire et apolaire dans le mélange de solvants recyclé (23 et 46) par les conduites 6 et 27 pour le bac d'appoint 4 de solvant polaire, et par les conduites 7 et 26 pour le bac d'appoint 5 de solvant apolaire.

Les proportions de solvant apolaire et de solvant polaire sont adaptées à la séparation désirée pour chacune des étapes.

### Exemple 1 (comparatif)

Un résidu (RA) résultant de la distillation atmosphérique d'un brut Athabasca est distillé sous vide dans des conditions permettant d'obtenir un résidu sous vide (RSV) dont les principales caractéristiques sont présentées dans le tableau 1 ci-après. La charge du lit bouillonnant est donc un résidu sous vide de brut (RSV) extra-lourd dont les propriétés sont les suivantes :

**Tableau 1 : Composition de la charge de l'unité d'hydroconversion en lit bouillonnant**

| | | RSV Athabasca |
|---|---|---|
| Densité | | 1,048 |
| Viscosité à 100°C | cSt | 12600 |
| Conradson Carbon | %pds | 20,5 |
| C7 Asphaltènes | %pds | 14 |
| C5 Asphaltènes | %pds | 25 |
| Nickel + Vanadium | ppm | 432 |
| Azote | ppm | 6200 |
| Soufre | %pds | 5,72 |

| | | |
|---|---|---|
| (%pds = pourcentage poids); (ppm= partie par millions) | | |

La charge obtenue est envoyée en totalité dans une unité d'hydroconversion en présence d'hydrogène, ladite section comprenant au moins un réacteur triphasique contenant un catalyseur d'hydroconversion NiMo/alumine. La section fonctionne en lit bouillonnant à courant ascendant de liquide et de gaz. L'unité utilisée comporte deux réacteurs en série et est munie d'un séparateur inter-étage. Les conditions appliquées dans l'unité d'hydroconversion sont les suivantes :
Vitesse volumique horaire du réacteur (VVH)_{réacteur} = 0,3 h⁻¹
Pression totale (Pₜₒₜ) = 16 MPa
Température (T°)= 410°C.
Quantité d'hydrogène mélangée à la charge dans le premier réacteur= 630 Nm³/m³
Quantité d'hydrogène mélangée à la charge dans le second réacteur= 190 Nm³/m³

Ces conditions opératoires permettent d'obtenir un effluent liquide à teneur réduite en carbone Conradson, en métaux et en soufre. L'effluent liquide hydroconverti est ensuite envoyé dans une zone de séparation composée de deux ballons de flash en série pour obtenir une fraction liquide légère bouillant à une température inférieure à 375°C et une fraction liquide lourde bouillant à une température supérieure à 375°C.

La fraction lourde bouillant à une température supérieure à 375°C contient une partie de la fraction gazole bouillant entre 250 et 375°C, une fraction bouillant entre 375 et 524°C appelé distillat sous vide (DSV) et une fraction bouillant à une température supérieure à 524°C appelée résidu atmosphérique (RA). La composition de la fraction lourde bouillant à une température supérieure à 375°C est décrite dans le tableau 2 ci-dessous.

**Tableau 2 : Composition de la fraction lourde bouillant à une température supérieure à 375°C**

| | | Fraction lourde (375°C+) |
|---|---|---|
| Rendement | %pds | 63,1 |
| Densité | | 0,996 |
| Viscosité à 100 °C | cSt | 91,3 |
| Conradson Carbon | %pds | 9,4 |
| C7 Asphaltènes | %pds | 3,3 |
| Nickel + Vanadium | ppm | 62 |
| Azote | ppm | 5900 |
| Soufre | %pds | 1,06 |

| | | |
|---|---|---|
| (%pds = pourcentage poids); (ppm= partie par millions) | | |

La totalité de la fraction liquide lourde bouillant à une température supérieure à 375°C issue de l'étape de séparation, sans étape de distillation atmosphérique et sous vide intermédiaire, est désasphaltée pour obtenir une coupe hydrocarbonée désasphaltée et de l'asphalte résiduel. Les conditions appliquées dans l'unité de désasphaltage sont les suivantes :
Solvant : C3 / toluène = 35/65 v/v (volume/volume)
Pression totale (Ptot) = 4 MPa
Température moyenne (T°moyenne )= 130°C
Ratio volumique solvant/charge = 5/1 v/m (volume/masse)

En sortie du désasphaltage sélectif, on obtient une coupe huile désasphaltée (DAO) et un asphalte. La coupe huile désasphaltée (DAO) et l'asphalte possèdent les caractéristiques suivantes indiquées dans le tableau 3 :

**Tableau 3 : Composition de la coupe huile désasphaltée DAO et de l'asphalte**

| | | DAO | Asphalte |
|---|---|---|---|
| Rendement | %pds | 95 | 5 |
| Densité | | 0,986 | 1,23 |
| Bille & Anneau | °C | - | 310 |
| Viscosité à 250 °C | cSt | - | Non mesurable |
| Viscosité à 100 °C | cSt | 40 | Non mesurable |
| Conradson Carbon | %pds | 8.0 | 37.0 |
| C7 Asphaltènes | %pds | 0,7 | - |
| Nickel + Vanadium | ppm | 43 | 428 |
| Azote | ppm | 5600 | 12200 |
| Soufre | %pds | 1,00 | 2,09 |
| H/C | | 1,45 | - |

| | | | |
|---|---|---|---|
| (%pds = pourcentage poids); (ppm= partie par millions) | | | |

Le procédé permet donc d'isoler une coupe huile désasphaltée avec un rendement global de 59,9% poids par rapport au résidu sous vide Athabasca de départ. L'huile désasphaltée DAO obtenue à l'issue du désasphaltage sélectif selon l'invention, de par son caractère aromatique peut être recyclée idéalement au lit bouillonnant pour avoir un effet stabilisant du milieu traité en solubilisant et/ou peptisant et/ou dispersant les structures moléculaires propices à la formation des sédiments. La totalité de l'huile désasphaltée DAO recyclée est complètement convertie en fraction 540-. On obtient une conversion globale de la fraction 540+ de 96,8% poids.

### Exemple 2 (selon l'invention):

La charge du désasphaltage sélectif en 2 étapes selon l'invention est la même que celle présentée dans le tableau 2 de l'exemple 1. Les conditions appliquées dans l'unité de désasphaltage sélectif sont les suivantes:
Première étape de désasphaltage:
   Solvant : C3 / toluène = 35/65 v/v (volume/volume)
   Pression totale (Pₜₒₜ) = 4 MPa
   Température moyenne (T°_{moyenne})= 130°C.
   Ratio solvant/charge = 5/1 v/m (volume/masse)
Deuxième étape de désasphaltage:
   Solvant : C3 / toluène = 99/1 v/v (volume/volume)
   Pression totale (Pₜₒₜ) = 4 MPa
   Température moyenne (T°_{moyenne})= 120°C.
   Ratio solvant/charge = 5/1 v/m (volume/masse)

En sortie de la première étape de désasphaltage sélectif, on obtient une coupe huile désasphaltée (DAO ou DAO complète) et un asphalte. En sortie de la deuxième étape de désasphaltage sélectif, on obtient une coupe huile désasphaltée lourde (DAO lourde) et une coupe huile désasphaltée légère (DAO légère). Les coupes huile désasphaltées (DAO, DAO lourde, DAO légère) et l'asphalte possèdent les caractéristiques suivantes indiquées dans le tableau 4 :

**Tableau 4 : Composition des coupes huiles désasphaltées (DAO, DAO lourde, DAO légère) et de l'asphalte**

| | | 1^{ère} étape | | 2^{ème} étape | |
|---|---|---|---|---|---|
| | | DAO | Asphalte | DAO lourde | DAO légère |
| Rendement | %pds charge d'entrée | 95 | 5 | 57 | 38 |
| Densité | | 0,986 | 1,230 | 1.021 | 0.933 |
| Bille & Anneau | °C | - | 310 | - | - |
| Viscosité à 100°C | cSt | 40 | NM | 56 | 25 |
| Conradson Carbon | %pds | 8.0 | 37.0 | 13.0 | 0.2 |
| C7 Asphaltènes | %pds | 0,7 | - | 1.1 | 0.01 |
| Nickel + Vanadium | ppm | 43 | 428 | 71 | 1 |
| Azote | ppm | 5600 | 12200 | 8713 | 930 |
| Soufre | %pds | 1,00 | 2,09 | 1.47 | 0.30 |
| H/C | | 1,45 | - | 1,28 | 2.11 |

| | | | | | |
|---|---|---|---|---|---|
| (%pds = pourcentage poids); (ppm= partie par millions); (NM= Non mesurable) | | | | | |

Le procédé selon l'invention permet donc d'isoler dans une première étape une coupe huile désasphaltée avec un rendement global de 59,9% poids par rapport au résidu sous vide Athabasca de départ. De plus, grâce à l'introduction d'une deuxième étape de désasphaltage sélectif, la coupe huile désasphaltée est sous-découpée en une coupe huile désasphaltée lourde et une coupe huile désasphaltée légère. Grâce à la deuxième étape, l'avantage est donc de fractionner la fraction huile désasphaltée complète en deux autres coupes d'intérêts différents.

L'huile désasphaltée lourde dite DAO lourde obtenue à l'issue de la deuxième étape de désasphaltage sélectif selon l'invention, de part son caractère plus aromatique peut être recyclée idéalement au lit bouillonnant pour avoir un effet stabilisant du milieu traité en solubilisant et/ou peptisant et/ou dispersant les structures moléculaires propices à la formation des sédiments.

L'huile désasphaltée légère dite DAO légère obtenue à l'issue de la deuxième étape de désasphaltage sélectif selon l'invention ainsi débarrassée en partie de la fraction aromatique et de la fraction résine présente un caractère réfractaire beaucoup moins prononcé ce qui permet de baisser les conditions de pressions dans les procédés d'hydrotraitement et/ou d'hydrocraquage de post-traitement. Ceci permet d'améliorer la profitabilité du post traitement.

Comparativement à l'enchaînement d'une unité d'hydroconversion en lit bouillonnant avec une unité de désasphaltage sélectif en une étape, l'huile désasphaltée lourde dite DAO lourde recyclée présente des propriétés différentes : le ratio hydrogène sur carbone (H/C) a diminué de 0,17 points; la densité, le CCR et la teneur en asphaltènes C7 ont augmenté respectivement de 0,035 points, de 5 points et de 0,4 points. Ce caractère plus aromatique de l'huile désasphaltée DAO lourde recyclée permet d'augmenter de 3°C la température du ou des réacteurs du lit bouillonnant améliorant ainsi la conversion globale. Cette conversion globale observée de la fraction 540+ passe de 96,8% à de 98,8% poids.

## Revendications

1. Procédé de conversion d'une charge lourde d'hydrocarbures ayant une température initiale d'ébullition d'au moins 300°C comprenant les étapes suivantes :
a) une étape d'hydroconversion d'au moins une partie de ladite charge en présence d'hydrogène dans au moins un réacteur triphasique, ledit réacteur contenant au moins un catalyseur d'hydroconversion et fonctionnant en lit bouillonnant, à courant ascendant de liquide et de gaz et comportant au moins un moyen de soutirage dudit catalyseur hors dudit réacteur et au moins un moyen d'appoint de catalyseur frais dans ledit réacteur, dans des conditions permettant d'obtenir une charge liquide à teneur réduite en carbone Conradson, en métaux, en soufre et en azote,
b) une étape de séparation de l'effluent issu de l'étape a) pour obtenir une fraction liquide légère bouillant à une température inférieure à 300°C et une fraction liquide lourde bouillant à une température supérieure à 300°C,
c) au moins deux étapes de désasphaltage en série sur au moins une partie de la fraction liquide lourde issue de l'étape b), permettant de séparer au moins une fraction asphalte, au moins une fraction d'huile désasphaltée lourde, dite DAO lourde et au moins une fraction d'huile désasphaltée légère dite DAO légère, au moins une desdites étapes de désasphaltage étant réalisée au moyen d'un mélange d'au moins un solvant polaire et d'au moins un solvant apolaire, les proportions dudit solvant polaire et dudit solvant apolaire du mélange de solvant étant ajustées selon les propriétés de la charge traitée et selon le rendement en asphalte et/ou la qualité de la l'huile désasphaltée souhaité (e)(s), lesdites étapes de désasphaltage étant mises en oeuvre dans les conditions subcritiques du mélange des solvants utilisé,
d) une étape de recyclage d'au moins une partie de ladite coupe huile desasphaltée lourde dite DAO lourde issue de l'étape c) en amont de l'étape a) d'hydroconversion.

2. Procédé selon la revendication 1 dans lequel l'étape a) est mise en oeuvre dans un ou plusieurs réacteurs triphasiques d'hydroconversion avec des ballons décanteurs intermédiaires.

3. Procédé selon la revendication 1 ou 2, dans lequel l'étape c) est mise en oeuvre sur au moins une partie de la fraction lourde préalablement soumise à une étape de strippage à la vapeur et/ou à l'hydrogène ou à une étape de fractionnement sous-vide.

4. Procédé selon l'une des revendications précédentes dans lequel l'étape a) d'hydroconversion opère sous une pression absolue comprise entre 2 et 35 MPa, à une température comprise entre 300 et 550°C, à une vitesse spatiale horaire (VVH) comprise entre 0,1 h⁻¹ et 10 h⁻¹ et sous une quantité d'hydrogène mélangée à la charge comprise entre 50 et 5000 normaux mètres cube (Nm³) par mètre cube (m³) de charge liquide.

5. Procédé selon l'une des revendications précédentes dans lequel au moins une partie de la fraction huile désasphaltée légère dite DAO légère est envoyée vers des unités de post-traitement telles qu'une unité d'hydrotraitement et/ou d'hydrocraquage, ou de craquage catalytique.

6. Procédé selon l'une des revendications précédentes dans lequel au moins une partie de la coupe huile désasphaltée lourde dite DAO lourde non recyclée en amont de l'étape a) d'hydroconversion et/ou à l'entrée de l'étape b) de séparation est envoyée, de préférence en mélange avec au moins une partie de la fraction liquide légère issue de l'étape b) et/ou au moins une partie de l'huile désasphaltée légère dite DAO légère issue de l'étape c) dans des unités de post-traitement.

7. Procédé selon l'une des revendications précédentes dans lequel le catalyseur d'hydroconversion est un catalyseur comprenant un support alumine et au moins un métal du groupe VIII choisi parmi le nickel et le cobalt, ledit élément du groupe VIII étant utilisé en association avec au moins un métal du groupe VIB choisi parmi le molybdène et le tungstène.

8. Procédé selon l'une des revendications précédentes dans lequel l'étape c) comprend au moins :
c1) une première étape de désasphaltage comprenant la mise en contact de la fraction liquide lourde avec un mélange d'au moins un solvant polaire et d'au moins un solvant apolaire, les proportions dudit solvant polaire et dudit solvant apolaire étant ajustées de manière à obtenir au moins une fraction de phase asphalte et une fraction de phase huile désasphaltée complète dite DAO complète; et
c2) une deuxième étape de désasphaltage comprenant la mise en contact de la phase huile désasphaltée complète dite DAO complète issue de l'étape c1) avec soit un solvant apolaire soit un mélange d'au moins un solvant polaire et d'au moins un solvant apolaire, les proportions dudit solvant polaire et dudit solvant apolaire dans le mélange étant ajustées de manière à obtenir au moins une fraction de phase huile désasphaltée légère dite DAO légère et une fraction de phase huile désasphaltée lourde dite DAO lourde,
lesdites étapes de désasphaltage étant mises en oeuvre dans les conditions subcritiques du solvant ou du mélange de solvants utilisé.

9. Procédé selon la revendication 8 dans lequel l'huile désasphaltée complète dite DAO complète issue de l'étape c1) avec au moins en partie le mélange de solvants est soumise à au moins une étape de séparation dans laquelle l'huile désasphaltée complète dite DAO complète est séparée du mélange de solvants ou au moins une étape de séparation dans laquelle l'huile désasphaltée complète dite DAO complète est séparée uniquement du solvant apolaire.

10. Procédé selon la revendication 8 dans lequel l'huile désasphaltée complète dite DAO complète issue de l'étape c1) avec au moins en partie le mélange de solvants est soumise à au moins deux étapes de séparation successives permettant de séparer individuellement les solvants dans chaque étape.

11. Procédé selon l'une des revendications 1 à 7 dans lequel l'étape c) comprend au moins :
c'1) une première étape de désasphaltage comprenant la mise en contact de la fraction liquide lourde avec soit un solvant apolaire, soit un mélange d'au moins un solvant polaire et d'au moins un solvant apolaire, les proportions dudit solvant polaire et dudit solvant apolaire du mélange étant ajustées de manière à obtenir au moins une fraction de phase huile désasphaltée légère dite DAO légère et un effluent comprenant une phase huile et une phase asphalte; et
c'2) une deuxième étape de désasphaltage comprenant la mise en contact de l'effluent issu de l'étape c'1) avec un mélange d'au moins un solvant polaire et d'au moins un solvant apolaire, les proportions dudit solvant polaire et dudit solvant apolaire étant ajustées de manière à obtenir au moins une fraction de phase asphalte et une fraction de phase huile désasphaltée lourde dite DAO lourde, lesdites étapes de désasphaltage étant mises en oeuvre dans les conditions subcritiques du solvant ou du mélange de solvants utilisé.

12. Procédé selon la revendication 11 dans lequel l'effluent est soumis à au moins une étape de séparation dans laquelle il est séparé du solvant apolaire ou du mélange de solvants ou au moins une étape de séparation dans lequel ledit effluent est séparée uniquement du solvant apolaire contenu dans le mélange de solvants.

13. Procédé selon la revendication 11 dans lequel l'effluent est soumis à au moins deux étapes de séparation successives permettant de séparer individuellement les solvants dans chaque étape de séparation.

14. Procédé selon l'une des revendications précédentes dans lequel le solvant polaire utilisé à l'étape c) de désasphaltage est choisi parmi les solvants aromatiques purs ou napthéno-aromatiques, les solvants polaires comportant des hétéro-éléments, ou leur mélange ou des coupes riches en aromatiques telles des coupes issues du FCC (Fluid Catalytic Cracking), des coupes dérivées du charbon, de la biomasse ou de mélange biomasse/charbon.

15. Procédé selon l'une des revendications précédentes dans lequel le solvant apolaire utilisé à l'étape c) de désasphaltage comprend un solvant composé d'hydrocarbure saturé comprenant un nombre d'atomes de carbone supérieur ou égal à 2, de préférence compris entre 2 et 9.

16. Procédé selon l'une des revendications précédentes dans lequel l'étape c) est mise en oeuvre avec un rapport de volume du mélange de solvants polaire et apolaire sur la masse de la charge compris entre 1/1 et 10/1 exprimé en litres par kilogrammes.

17. Procédé selon l'une des revendications précédentes dans lequel la charge est du pétrole brut ou une charge issue de la distillation atmosphérique ou de la distillation sous-vide de pétrole brut, ou une fraction résiduelle issue de la liquéfaction directe de charbon ou encore un distillat sous-vide ou encore une fraction résiduelle issue de la liquéfaction directe de la biomasse ligno-cellulosique seule ou en mélange avec du charbon et/ou une fraction pétrolière résiduelle.

18. Procédé selon l'une des revendications précédentes dans lequel on injecte un précurseur catalytique soit avec la charge de l'unité d'hydroconversion opérant en lit bouillonnant, soit au séparateur inter-étage entre deux réacteurs, soit à l'entrée d'un des autres réacteurs.

## Patentansprüche

1. Verfahren zur Umwandlung eines schweren Kohlenwasserstoffausgangsmaterials mit einem Anfangssiedepunkt von mindestens 300 °C, umfassend die folgenden Schritte:
a) einen Schritt zur Hydrokonversion mindestens eines Teils des Ausgangsmaterials in Gegenwart von Wasserstoff in mindestens einem Dreiphasenreaktor, wobei der Reaktor mindestens einen Hydrokonversionskatalysator enthält und in einer Wirbelschicht mit einem aufsteigenden Strom aus Flüssigkeit und Gas arbeitet und mindestens eine Einrichtung zum Abziehen des Katalysators aus dem Reaktor und mindestens eine Einrichtung zum Zuführen von frischem Katalysator in den Reaktor umfasst, unter Bedingungen, die es ermöglichen, ein flüssiges Ausgangsmaterial mit einem reduzierten Gehalt an Kohlenstoff nach Conradson, Metallen, Schwefel und Stickstoff zu erhalten,
b) einen Schritt zum Abtrennen des aus Schritt a) stammenden Abflusses, um eine leichte flüssige Fraktion, die bei einer Temperatur unter 300 °C siedet, und eine schwere flüssige Fraktion, die bei einer Temperatur oberhalb von 300 °C siedet, zu erhalten,
c) mindestens zwei in Serie geschaltete Schritte zur Deasphaltierung mindestens eines Teils der aus Schritt b) stammenden schweren flüssigen Fraktion, die es ermöglichen, mindestens eine Asphaltfraktion, mindestens eine Fraktion aus schwerem deasphaltiertem Öl, genannt schweres DAO, und mindestens eine Fraktion aus leichtem deasphaltiertem Öl, genannt leichtes DAO, abzutrennen, wobei mindestens einer der Deasphaltierungsschritte mithilfe eines Gemischs aus mindestens einem polaren Lösemittel und mindestens einem unpolaren Lösemittel ausgeführt wird, wobei die Anteile des polaren Lösemittels und des unpolaren Lösemittel des Lösemittelgemischs in Abhängigkeit von den Eigenschaften des behandelten Ausgangsmaterials und in Abhängigkeit von der gewünschten Asphaltausbeute und/oder der gewünschten Qualität des deasphaltierten Öls angepasst werden, wobei die Deasphaltierungsschritte unter den unterkritischen Bedingungen des verwendeten Lösemittelgemischs durchgeführt werden,
d) einen Schritt zum Recyceln mindestens eines Teils des aus Schritt c) stammenden deasphaltierten schweren Schnitts, genannt schweres DAO, stromaufwärts des Schritts a) zur Hydrokonversion.

2. Verfahren nach Anspruch 1, wobei Schritt a) in einem oder mehreren Dreiphasenreaktoren zur Hydrokonversion mit Zwischen-Dekantertrommeln durchgeführt wird.

3. Verfahren nach Anspruch 1 oder 2, wobei Schritt c) mit mindestens einem Teil der schweren Fraktion durchgeführt wird, der zuvor einem Schritt zum Wasserdampfstrippen und/oder Wasserstoffstrippen oder einem Schritt zur Vakuumfraktionierung unterzogen wurde.

4. Verfahren nach einem der vorhergehenden Ansprüche, wobei der Schritt a) zur Hydrokonversion unter einem absoluten Druck im Bereich zwischen 2 und 35 MPa, bei einer Temperatur im Bereich zwischen 300 und 550 °C; bei einer Raumgeschwindigkeit pro Stunde (HSV) im Bereich zwischen 0,1 h⁻¹ und 10 h⁻¹ und mit einer mit dem Ausgangsmaterial gemischten Menge an Wasserstoff im Bereich zwischen 50 und 5.000 Normkubikmeter (Nm³) pro Kubikmeter (m³) flüssiges Ausgangsmaterial arbeitet.

5. Verfahren nach einem der vorhergehenden Ansprüche, wobei mindestens ein Teil der leichten deasphaltierten Ölfraktion, genannt leichtes DAO, in die Nachbehandlungseinheiten, wie beispielsweise eine Einheit zur Hydrobehandlung und/oder zum Hydrocracken oder zum katalytischen Cracken, geschickt wird.

6. Verfahren nach einem der vorhergehenden Ansprüche, wobei mindestens ein Teil des schweren deasphaltierten Ölschnitts, genannt schweres DAO, der nicht stromaufwärts von Schritt a) zur Hydrokonversion und/oder am Einlass von Schritt b) zum Abtrennen recycelt wird, vorzugsweise als Gemisch mit mindestens einem Teil der aus Schritt b) stammenden leichten flüssigen Fraktion und/oder mindestens einem Teil des aus Schritt c) stammenden leichten deasphaltierten Öls, genannt leichtes DAO, in Nachbehandlungseinheiten geschickt wird.

7. Verfahren nach einem der vorhergehenden Ansprüche, wobei der Hydrokonversionskatalysator ein Katalysator ist, der einen Aluminiumoxidträger und mindestens ein Metall der Gruppe VIII, ausgewählt aus Nickel und Cobalt, umfasst, wobei das Element der Gruppe VIII in Kombination mit mindestens einem Metall der Gruppe VIB, ausgewählt aus Molybdän und Wolfram, verwendet wird.

8. Verfahren nach einem der vorhergehenden Ansprüche, wobei Schritt c) mindestens umfasst:
c1) einen ersten Schritt zum Deasphaltieren, umfassend das Inkontaktbringen der schweren flüssigen Fraktion mit einem Gemisch aus mindestens einem polaren Lösemittel und mindestens einem unpolaren Lösemittel, wobei die Anteile des polaren Lösemittels und des unpolaren Lösemittels so angepasst sind, dass mindestens eine Fraktion aus Asphaltphase und eine vollständige Fraktion aus vollständiger deasphaltierter Ölphase, genannt vollständige DAO, erhalten wird; und
c2) einen zweiten Schritt zum Deasphaltieren, umfassend das Inkontaktbringen der aus Schritt c1) stammenden vollständigen deasphaltierten Ölphase, genannt vollständige DAO, mit entweder einem unpolaren Lösemittel oder mit einem Gemisch aus mindestens einem polaren Lösemittel und mindestens einem unpolaren Lösemittel, wobei die Anteile des polaren und des unpolaren Lösemittels in dem Gemisch angepasst werden, um mindestens eine Fraktion der leichten deasphaltierten Ölphase, genannt leichtes DAO, und eine Fraktion der schweren deasphaltierten Ölphase, genannt schweres DAO, zu erhalten, wobei die Deasphaltierungsschritte unter den unterkritischen Bedingungen des verwendeten Lösemittels oder des verwendeten Lösemittelgemischs durchgeführt werden.

9. Verfahren nach Anspruch 8, wobei das aus Schritt c1) stammende vollständige deasphaltierte Öl, genannt vollständiges DAO, mit mindestens einem Teil des Lösemittelgemischs mindestens einem Schritt zum Abtrennen, in dem das vollständige deasphaltierte Öl, genannt vollständiges DAO, von dem Lösemittelgemisch abgetrennt wird, oder mindestens einem Schritt zur Abtrennung unterzogen wird, in dem das vollständige deasphaltierte Öl, genannt vollständiges DAO nur von dem unpolaren Lösemittel getrennt wird.

10. Verfahren nach Anspruch 8, wobei das aus Schritt c1) stammende, vollständige deasphaltierte Öl, genannt vollständiges DAO mit mindestens einem Teil des Lösemittelgemischs mindestens zwei aufeinander folgenden Schritten zur Abtrennung unterzogen wird, die es ermöglichen, die Lösemittel in jedem Schritt einzeln abzutrennen.

11. Verfahren nach einem der Ansprüche 1 bis 7, wobei Schritt c) mindestens umfasst:
c'1) einen ersten Schritt zum Deasphaltieren, der das Inkontaktbringen der schweren flüssigen Fraktion entweder mit einem unpolaren Lösemittel oder einem Gemisch aus mindestens einem polaren Lösemittel und mindestens einem unpolaren Lösemittel umfasst, wobei die Anteile des polaren Lösemittels und des unpolaren Lösemittels in dem Gemisch so angepasst sind, dass mindestens eine Fraktion der leichten deasphaltierten Ölphase, genannt leichte DAO, und ein Abfluss, umfassend eine Ölphase und eine Asphaltphase, erhalten werden; und
c'2) einen zweiten Schritt zum Deasphaltieren, umfassend das Inkontaktbringen des aus Schritt c'1) stammenden Abflusses mit einem Gemisch aus mindestens einem polaren Lösemittel und mindestens einem unpolaren Lösemittel, wobei die Anteile des polaren Lösemittels und des unpolaren Lösemittels so angepasst sind, dass mindestens eine Fraktion der Asphaltphase und eine Fraktion der schweren deasphaltierten Ölphase, genannt schweres DAO, erhalten wird; und
wobei die Deasphaltierungsschritte unter den unterkritischen Bedingungen des verwendeten Lösemittels oder des verwendeten Lösemittelgemischs durchgeführt werden.

12. Verfahren nach Anspruch 11, wobei der Abfluss mindestens einem Schritt zum Abtrennen, in dem er von dem unpolaren Lösemittel oder dem Lösemittelgemisch abgetrennt wird, oder mindestens einem Schritt zum Abtrennen unterzogen wird, in dem der Abfluss nur von dem unpolaren Lösemittel, das in dem Lösemittelgemisch enthalten ist, abgetrennt wird.

13. Verfahren nach Anspruch 11, wobei der Abfluss mindestens zwei aufeinander folgenden Schritten zum Abtrennen unterzogen wird, die es ermöglichen, die Lösemittel in jedem Abtrennungsschritt einzeln abzutrennen.

14. Verfahren nach einem der vorhergehenden Ansprüche, wobei das in Schritt c) zum Deasphaltieren verwendete polare Lösemittel ausgewählt ist aus reinen aromatischen oder napthenaromatischen Lösemitteln, polaren Lösemitteln, die Heteroelemente umfassen, oder einem Gemisch aus aromatenreichen Schnitten, wie beispielsweise aus dem FCC (Fluid Catalytic Cracking) stammenden Schnitten, aus Kohle, Biomasse oder einem Biomasse/Kohle-Gemisch abgeleiteten Schnitten.

15. Verfahren nach einem der vorhergehenden Ansprüche, wobei das in Schritt c) verwendete unpolare Lösemittel zum Deasphaltieren ein Lösemittel umfasst, das aus gesättigtem Kohlenwasserstoff besteht, der eine Anzahl an Kohlenstoffatomen größer oder gleich 2, vorzugsweise im Bereich zwischen 2 und 9 umfasst.

16. Verfahren nach einem der vorhergehenden Ansprüche, wobei Schritt c) mit einem Volumenverhältnis des Gemischs aus polaren und unpolaren Lösemitteln zur Masse des Ausgangsmaterials im Bereich zwischen 1/1 und 10/1, ausgedrückt in Liter pro Kilogramm, durchgeführt wird.

17. Verfahren nach einem der vorhergehenden Ansprüche, wobei das Ausgangsmaterial Rohöl ist oder ein Ausgangsmaterial, das aus der Atmosphärendestillation oder der Vakuumdestillation von Rohöl stammt, oder eine Restfraktion, die aus der direkten Kohleverflüssigung stammt, oder auch ein Vakuumdestillat oder auch eine Restfraktion, die aus der Direktverflüssigung von lignozellulosehaltiger Biomasse stammt, allein oder als Gemisch mit Kohle und/oder einer Restölfraktion.

18. Verfahren nach einem der vorhergehenden Ansprüche, wobei ein katalytischer Vorläufer entweder mit dem Ausgangsmaterial der Hydrokonversionseinheit, die in der Wirbelschicht arbeitet, oder in den Zwischenstufen-Separator zwischen zwei Reaktoren arbeitet, oder am Einlass eines der anderen Reaktoren eingespritzt wird.

## Claims

1. Process for the conversion of a heavy hydrocarbon feedstock having an initial boiling point of at least 300°C comprising the following stages:
a) a stage of hydroconversion of at least a part of said feedstock in the presence of hydrogen in at least one three-phase reactor, said reactor containing at least one hydroconversion catalyst and operating as an ebullating bed, with ascending flow of liquid and of gas and comprising at least one means for drawing off said catalyst from said reactor and at least one means for supplying fresh catalyst to said reactor, under conditions making it possible to obtain a liquid feedstock with a reduced content of Conradson carbon, metals, sulphur and nitrogen,
b) a stage of separation of the effluent originating from stage a) in order to obtain a light liquid fraction with a boiling point lower than 300°C and a heavy liquid fraction with a boiling point greater than 300°C,
c) at least two stages of deasphalting in series on at least a part of the heavy liquid fraction originating from stage b), making it possible to separate at least one fraction of asphalt, at least one fraction of heavy deasphalted oil, referred to as heavy DAO and at least one fraction of light deasphalted oil referred to as light DAO, at least one of said stages of deasphalting being carried out by means of a mixture of at least one polar solvent and at least one apolar solvent, the proportions of said polar solvent and said apolar solvent in the mixture of solvents being adjusted depending on the properties of the feedstock treated and depending on the desired yield of asphalt and/or quality of the deasphalted oil, said stages of deasphalting being implemented under the subcritical conditions of the mixture of solvents used,
d) a stage of recycling at least a part of said heavy deasphalted oil cut referred to as heavy DAO originating from stage c) upstream of the stage a) of hydroconversion.

2. Process according to claim 1, in which stage a) is implemented in one or more three-phase hydroconversion reactors with intermediate settler drums.

3. Process according to claim 1 or 2, in which stage c) is implemented on at least a part of the heavy fraction previously subjected to a stage of steam stripping and/or hydrogen stripping or to a stage of vacuum fractionation.

4. Process according to one of the preceding claims, in which the stage a) of hydroconversion is carried out under an absolute pressure comprised between 2 and 35 MPa, at a temperature comprised between 300 and 550°C, at a hourly space velocity (HSV) comprised between 0.1 h⁻¹ and 10 h⁻¹ and with a quantity of hydrogen mixed with the feedstock comprised between 50 and 5000 normal cubic metres (Nm³) per cubic metre (m³) of liquid feedstock.

5. Process according to one of the preceding claims, in which at least a part of the fraction of light deasphalted oil referred to as light DAO is sent to the post-treatment units such as a hydrotreating and/or hydrocracking, or catalytic cracking unit.

6. Process according to one of the preceding claims, in which at least a part of the heavy deasphalted oil cut referred to as heavy DAO not recycled upstream of the stage a) of hydroconversion and/or to the inlet of the stage b) of separation is sent, preferably in a mixture with at least a part of the light liquid fraction originating from stage b) and/or at least a part of the light deasphalted oil referred to as light DAO originating from stage c), to post-treatment units.

7. Process according to one of the preceding claims, in which the hydroconversion catalyst is a catalyst comprising an alumina support and at least one group VIII metal selected from nickel and cobalt, said group VIII element being used in combination with at least one group VIB metal selected from molybdenum and tungsten.

8. Process according to one of the preceding claims, in which stage c) comprises at least:
c1) a first stage of deasphalting comprising bringing the heavy liquid fraction into contact with a mixture of at least one polar solvent and at least one apolar solvent,
the proportions of said polar solvent and of said apolar solvent being adjusted so as to obtain at least one fraction of asphalt phase and a fraction of complete deasphalted oil phase referred to as complete DAO; and
c2) a second stage of deasphalting comprising bringing the complete deasphalted oil phase referred to as complete DAO originating from stage c1) into contact with either an apolar solvent or a mixture of at least one polar solvent and at least one apolar solvent, the proportions of said polar solvent and of said apolar solvent in the mixture being adjusted so as to obtain at least one fraction of light deasphalted oil phase referred to as light DAO and a fraction of heavy deasphalted oil phase referred to as heavy DAO,
said stages of deasphalting being implemented under the subcritical conditions of the solvent or mixture of solvents used.

9. Process according to claim 8, in which the complete deasphalted oil referred to as complete DAO originating from stage c1) with, at least in part, the mixture of solvents is subjected to at least one stage of separation in which the complete deasphalted oil referred to as complete DAO is separated from the mixture of solvents or at least one stage of separation in which the complete deasphalted oil referred to as complete DAO is separated only from the apolar solvent.

10. Process according to claim 8, in which the complete deasphalted oil referred to as complete DAO originating from stage c1) with, at least in part, the mixture of solvents is subjected to at least two successive stages of separation allowing the solvents to be separated individually in each stage.

11. Process according to one of claims 1 to 7, in which stage c) comprises at least:
c'1) a first stage of deasphalting comprising bringing the heavy liquid fraction into contact with either an apolar solvent, or a mixture of at least one polar solvent and at least one apolar solvent, the proportions of said polar solvent and said apolar solvent in the mixture being adjusted so as to obtain at least one fraction of light deasphalted oil phase referred to as light DAO and an effluent comprising an oil phase and an asphalt phase; and
c'2) a second stage of deasphalting bringing the effluent originating from stage c'1) into contact with a mixture of at least one polar solvent and at least one apolar solvent, the proportions of said polar solvent and of said apolar solvent being adjusted so as to obtain at least one fraction of asphalt phase and a fraction of heavy deasphalted oil phase referred to as heavy DAO,
said stages of deasphalting being implemented under the subcritical conditions of the solvent or mixture of solvents used.

12. Process according to claim 11, in which the effluent is subjected to at least one stage of separation, in which it is separated from the apolar solvent or mixture of solvents or at least one stage of separation, in which said effluent is separated only from the apolar solvent contained in the mixture of solvents.

13. Process according to claim 11, in which the effluent is subjected to at least two successive stages of separation making it possible to separate the solvents individually in each stage of separation.

14. Process according to one of the preceding claims, in which the polar solvent used in the stage c) of deasphalting is selected from the pure aromatic or naphthene-aromatic solvents, the polar solvents comprising heteroelements, or a mixture thereof or cuts rich in aromatics such as the cuts originating from FCC (Fluid Catalytic Cracking), cuts derived from coal, biomass or biomass/coal mixture.

15. Process according to one of the preceding claims, in which the apolar solvent used in the stage c) of deasphalting comprises a solvent made up of a saturated hydrocarbon comprising a number of carbon atoms greater than or equal to 2, preferably comprised between 2 and 9.

16. Process according to one of the preceding claims, in which stage c) is implemented with a ratio of the volume of the mixture of polar and apolar solvents to the mass of the feedstock comprised between 1/1 and 10/1 expressed as litres per kilogram.

17. Process according to one of the preceding claims, in which the feedstock is crude oil or a feedstock originating from atmospheric distillation or vacuum distillation of crude oil, or a residual fraction originating from the direct liquefaction of coal or a vacuum distillate or a residual fraction originating from the direct liquefaction of lignocellulosic biomass alone or in a mixture with coal and/or a fraction of residual petroleum.

18. Process according to one of the preceding claims, in which a catalytic precursor is injected either with the feedstock of the ebullating-bed hydroconversion unit, or at the inter-stage separator between two reactors, or at the inlet of one of the other reactors.
